# EUROPEAN PATENT SPECIFICATION

(11) **EP 1 873 417 B1**
(45) Date of publication and mention of the grant of the patent: **26.05.2010**
(21) Application number: 07111446.6
(22) Date of filing: 29.06.2007
(51) Int. Cl.: F16D 43/18

(54) **Centrifugal Clutch**
Fliehkraftbetätigte Kupplung
Embrayage centrifuge

(30) Priority: 30.06.2006 CN 200610090792
(43) Date of publication of application: 02.01.2008
(73) Proprietor: Tuan, Huei, Hsinchu City (TW); Wu, Chun-Yi, Chunan Miao-Li (TW); Wu, Pei-Hsuan, Hsinchu City (TW)
(72) Inventor: Wu, Chun-Yi, Miao-Li (TW); Lian, Norman, 106, Taipei City (TW)
(74) Representative: Viering, Jentschura & Partner

(56) References cited:
- EP-A- 1 310 695
- US-A- 2 836 275
- US-A- 5 560 465

## Description

### FIELD OF THE INVENTION

This invention is related to a clutch that could enhance the performance of the clutch. It could strengthen the engaging force of each clutch weight to make power transmission of the clutch to become more powerful and more stable.

### BACKGROUND OF THE INVENTION

US-A-5 560 465 discloses a centrifugal clutch comprising a rotatable drum, a plurality of shoes, each shoe having an external engagement surface extending between leading and trailing contact extremities of the shoe, means for coupling each shoe to a rotatable hub, and a means for permitting movement of each shoe radially, wherein the means for coupling comprises a plurality of clogs formed on the hub, engaging the respective shoe, and the means for permitting comprises a radially oriented slot on each shoe for engaging the corresponding clog.

The centrifugal clutch has been widely adopted in the automatically Continuous Variable Transmission [CVT] of the motorcycle. The well-known clutch consists of base plate installed with clutch weights and both ends of the clutch weight are interlinked through elastic spring (return element) and the pulling strength of the said elastic spring effects the timing of opening or closing action of the clutch weights..

The said base plate in general is in the state of unstable rotating speed and the pulling strength of each the said elastic spring [return element] is different. Therefore, the opening and closing process of the engagement of each clutch weight unavoidably is a unstable phenomena, resulting in the instability of power transmission.

The various adjustments of the pulling strength of the said elastic springs are disclosed in many patents such as European Patent EP1310595A1[Adjustable centrifugal friction clutch], Patent 382350 and Patent 447470 of Taiwan, ROC. Basically the technical means of these patents are regarding the methods of adjusting hooking distance of the elastic spring between the two clutch weights, and these structures of above patents still have the problems of weak engaging force and unstable engagement.

### DESCRIPTION OF THE INVENTION

The objective of present invention is to provide a clutch, wherein each constrained section, installed on the main driving assembly, can receive the torque transmitted from the engine to thrust into the engaging slot of each clutch weight; thus even if there is a slight timing difference in the response time of each clutch weight or a slight difference in pulling strength of the return element, the thrusting action of the constraint section still can strengthen the engaging force of each clutch weight and provide an anti-reversal function to reduce the vibration phenomena, so that the smoothness and stability of the power transmission could be provided.

To realize the above said objective, present invention provides a performance clutch by installing several clutch weights on the said base carrier, and each said clutch weight is connected with a return element; wherein the said base carrier contains a main driving assembly and an associate driven assembly; the said main driving assembly is installed with several constraint sections corresponding to each clutch weights respectively, so that the said main driving assembly could drive the associate driven assembly in an allowed differential driving, and the said associate driven assembly is installed with several clutch weights; wherein each clutch weight is formed with an engaging slot corresponding to each said constraint section to be pressed by each said constraint section; thus the said constraint section can receive the torque transmitted from the engine, and thrust into an abutting face of the said engaging slot of the clutch weight; thus the engaging force of each clutch weight is strengthened, and the smoothness and stability of power transmission is enhanced. This strengthening of engaging processing and the anti-reversal function correspondingly could shorten the slippage between the wear pad and the rim of driven disk, thereby increase the useful life of the clutch weight.

The high performance clutch provided by present invention contains a base carrier installed with a plurality of clutch weights, and on each said clutch weight a return element is installed; wherein the said base carrier consists of a main driving assembly and an associate driven assembly, and between the said main driving assembly and the said associate driven assembly a plurality of intermediate corotating elements are installed, so, when the rotation resistance, encountered by the said associate driven assembly, is greater than the transformation setting of the said intermediate corotation element, the said main driving assembly could drive the said associate driven assembly to corotate in an allowed differential driving, and the actuation timing of the differential driving is determined by the transformation setting of the said intermediate corotating element; and the said main driving assembly is installed with a plurality of constraint sections corresponding to each clutch weight, and the said associate driven assembly is installed with a plurality of clutch weights, wherein each clutch weight corresponding to the said constraint section is formed with an engaging slot to be pressed by the said constraint section; thus the constraint section can receive the torque transmitted from the engine and thrust into an abutting face of the said engaging slot; therefore the engaging force of each clutch weight is strengthened, and the smoothness and stability of power transmission is enhanced.

The high performance clutch provided by present invention wherein the said base carrier consists of a main driving assembly and an associate driven assembly; a plurality of pin-like constraint sections are installed on the said main driving assembly corresponding to each clutch weight; a plurality of intermediate corotating element mounting slots are installed on the said main driving assembly; a plurality of receiving slot are installed on the said associate driven assembly corresponding to the said mounting slot; a deformable intermediate corotating element is installed between each cooresponding mounting slot and receiving slot, that enables the said main driving assembly to drive the said associate driven assembly in an allowed differential driving; and a plurality of clutch weights are installed on the said associate driven assembly, while each clutch weight is formed with a V-shaped engaging slot corresponding to each of the said pin-like constraint section; thereby the rotating said main driving assembly drives the said associate driven assembly to corotate in an allowed differential driving, when the intermediate corotating element is deformed; so that the said pin-like constraint section receives torque transmitted from the engine and thrust onto the said V-shaped engaging slot of the clutch weight, therefore the engaging force of each clutch weight is strengthened, and the smoothness and stability of power transmission is enhanced.

The high performance clutch provided by present invention, wherein the said base carrier contains a main driving assembly and an associate driven assembly; where the said main driving assembly are installed with a plurality of mounting slots, the inlet of each of the said mounting slot is formed with a constraint flange to prevent the intermediate corotating element from separation; the said intermediate corotating element is a kind of chemical-resistant, highly durable plastic strip, the said main driving assembly takes the said platic strip as a medium for driving the said associate driven assembly, and when the rotation resistance encountered by the said associate driven assembly is greater than the transformation setting of the said intermediate corotating element, the intermediate corotating element will be deformed; thereby the rotating main driving assembly drives the said associate driven assembly to corotate in an allowed differential driving; the said pin-like constraint section receives the torque transmitted from the engine and thrust onto the said V-shaped engaging slot of the clutch weight, therefore the engaging force of each clutch weight is strengthened, and the smoothness and stability of power transmission is enhanced.

The high performance clutch provided by present invention, wherein the said base carrier contains a main driving assembly and an associate driven assembly; one side of the said main driving assembly is combined compositely with an operation-assisting frame and wherein the complex combination of the said main driving assembly and the said operation-assisting frame is provided with a plurality of constraint sections corresponding to each clutch weight respectively; a plurality of intermediate corotating elements are installed between the complex combination and the said associate driven assembly; thereby make the main driving assembly, combined compositely with the said operation-assisting frame, be able to drive the said associate driven assembly to corotate in an allowed differential driving; an engaging slot is formed on each clutch weight corresponding to each said constraint section; when the rotation resistance, encountered by the said associate driven assembly, is greater than the transformation setting of the intermediate corotating element, the intermediate corotating element will be deformed, thus the said main driving assembly will drive the said associate driven assembly to corotate in an allowed differential driving; thereby the constraint section, installed on the complex combination of said operation-assisting frame and said main driving assembly, will receive the torque transmitted from the engine and proceed thrusting onto the abutting face of the said engaging slot; therefore the engaging force of each clutch weight is strengthened, and the stability of power transmission is enhanced through the anti-reversal function provided in this engaging process.

The high performance clutch provided by present invention, wherein the said base carrier contains a main driving assembly and an associate driven assembly; on the axial inner side of the said main driving assembly is compositely combined with an operation-assisting frame extending through the said associate driven assembly; on the said operation-assisting frame, corresponding to each clutch weight, is formed with a plurality of projecting constraint sections and a plurality of hooking sections;each of the said hooking section is installed with a connecting hole, and on the said associate driven assembly corresponding to the said connecting holes is formed with a plurality of retention holes; each said connecting hole and the corresponding retention hole are connected respectively with opposite ends of a spring-based intermediate corotating element, which enables the said main driving assembly to drive the said associate driven assembly to corotate in an allowed differential driving; and the said associate driven assembly is installed with a plurality of clutch weights, and each clutch weight is formed with a V-shaped engaging slot corresponding to each constraint section; that makes the said constraint section press onto the said V-shaped engaging slot; thereby the rotating main driving assembly drives the said associate driven assembly to corotate in an allowed differential driving;and when the rotation resistance encountered by the said associate driven assembly is greater than the transformation setting of the said spring-based intermediate corotating element, the said intermediate corotating element is deformed so that the said projecting constraint section receives the torque transmitted from the engine and thrust onto the said V-shaped engaging slot; therefore the engaging force of each clutch weight is strengthened, and the smoothness and stability of power transmission is enhanced.

The high performance clutch provided by this present invention, wherein the said base carrier contains a main driving assembly and an associate driven assembly; on the axial inner side of the said main driving assembly is compositely combined with an operation-assisting frame extending through the said associate driven assembly, and on the said operation-assisting frame, corresponding to said clutch weights, is formed with a plurality of projecting constraint sections and a plurality of hooking sections, each of the said hooking section is installed with a connecting hole; and on the saidassociate driven assembly corresponding to said connecting holes a plurality of retention holes are formed; a spring-based intermediate corotating element is connected between each said connecting hole and corresponding retention hole and enables the said main driving assembly to drive the said associate driven assembly in an allowed differential driving, and the said associate driven assembly is installed with a plurality of clutch weights, and each said clutch weight corresponding to each said constraint section is formed with a V-shaped engaging slot that makes the said constraint section press on the said V-shaped engaging slot; and when the rotating resistance encountered by the said associate driven assembly is greater than the preset transformation setting of the said spring-based intermediate corotating element, the said spring-based intermediate corotating element generates deformation, thereby the said main driving assembly drives the said associate driven assembly to corotate in an allowed differential driving and the said projecting constraint section receives the torque transmitted from the engine and thrust onto the V-shaped engaging slot; therefore the engaging force of each clutch weight is strengthened, and the smoothness and stability of power transmission is enhanced.

The high performance clutch provided by present invention, wherein the connecting hole at the radial hooking section of the said operation-assisting frame of the said main driving assembly, and the corresponding retention hole on the said associate driven assembly are provided for connecting the two ends of the said spring-based intermediate corotating element, the said spring-based intermediate corotating element is mounted to the pivot at the same time when the clutch weight is installed to the pivot, thus to prevent the said spring-based intermediate corotating element from separation and to constitute the positioning.

The high performance clutch provided by present invention, wherein the said base carrier contains a main driving assembly and an associate driven assembly; on the axial inner side of the said main driving assembly is compositely combined with an operation-assisting frame extending through the said associate driven assembly; and a plurality of intermediate corotating elements are installed between the said operation-assisting frame and the said associate driven assembly, wherein the rotating main driving assembly drives the associate driven assembly to corotate via the said intermediate corotating elements; when the rotation resistance encountered by the said associate driven assembly is greater than the transformation setting of the said intermediate corotating element, the said main driving assembly could drive the said associate driven assembly in an allowed differential driving, and the actuation timing of differential driving is determined by the transformation setting of the said intermediate corotating element; on the said operation-assisting frame, corresponding to said clutch weights, is formed with a plurality of projecting constraint sections respectively; each clutch weight of said associate driven assembly, corresponding to each said constraint section, is formed with a V-shaped engaging slot that makes the said projecting constraint section press onto the said V-shaped engaging slot; thereby the rotating main driving assembly drives the said associate driven assembly to corotate in an allowed differential driving and when the rotation resistance encountered by the said associate driven assembly is greater than the transformation setting of the said spring-based intermediate corotating element, the intermediate corotating element is deformed; so that the said projecting constraint section receives the torque transmitted from the engine and thrust onto the said V-shaped engaging slot of the clutch weight; therefore the engaging force of each clutch weight is strengthened, and the smoothness and stability of power transmission is enhanced.

The high performance clutch provided by present invention, wherein the said base carrier contains a main driving assembly and an associate driven assembly; on the axial inner side of the said main driving assembly is compositely combined with an operation-assisting frame extending through the said associate driven assembly, on the said operation-assisting frame, corresponding to each clutch weight, is formed with a plurality of projecting constraint sections and a plurality of first hooking sections; on the said associate driven assembly, corresponding to the said first hooking sections, is formed with a plurality of retention sections, and each said retention section and the corresponding first hooking section are provided for connecting a spring-based intermediate corotating element that enables the said main driving assembly to drive the said associate driven assembly in an allowed differential driving; each clutch weight of the said associate driven assembly, corresponding to each constraint section, is formed with a V-shaped engaging slot that makes the said projecting constraint section press onto the said V-shaped engaging slot; when the rotation resistance encountered by the said associate driven assembly is greater than the transformation setting of the said spring-based intermediate corotating element, the said projecting constraint section receives the torque transmitted from the engine and thrusts onto the said V-shaped engaging slot of the clutch weight; therefore the engaging force of each clutch weight is strengthened, and the smoothness and stability of power transmission is enhanced.

The high performance clutch provided by present invention, wherein the said base carrier contains a main driving assembly and an associate driven assembly; on the axial inner side of the said main driving assembly is compositely combined with an operation-assisting frame extending through the said associate driven assembly, a plurality of intermediate corotating elements are installed between the said operation-assisting frame and the said associate driven assembly,
which enable the said main driving assembly to drive the said associate driven assembly in an allowed differential driving; on the said operation-assisting frame, corresponding to said clutch weights, is formed with a plurality of radial projecting constraint sections; and a plurality of second hooking sections are formed on the said operation-assisting frame; the said associate driven assembly is installed with a plurality of guide frames for the installation of clutch weights, and the return element of the clutch weight is connected with the said second hooking section of the operation-assisting frame;
on the inside face of each clutch weight, corresponding to each said projecting constraint section, is formed with an engaging slot for being pressed by the said projecting constraint section; the said clutch weight is centrifugally moving outward through the guide frame to proceed the engagement, and when the rotating resistance encountered by the said associate driven assembly is greater than the preset transformation setting of the said intermediate corotating element, the said intermediate corotating element is deformed,
thereby enable the said main driving assembly to drive the said associate driven assembly to corotate in an allowed differential driving, and thenthe projecting constraint section of the said operation-assisting element receives the torque transmitted from the engine and thrusts onto the abutting face in the said engaging slot of the clutch weight; therefore the engaging force of each clutch weight is strengthened, and the smoothness and stability of power transmission is enhanced.

The high performance clutch provided by present invention, wherein the radial projecting constraint section of the operation-assisting element is formed with a round hole, and the said round hole is in stalled with a small rotating wheel; the said rotating wheel rotatively presses the said engaging slot of the clutch weight, so that the abutting face in the said engaging slot will not be worn out easily.

The high performance clutch provided by present invention, wherein the inner side of the said clutch weight, corresponding to the said constraint section, is formed with a fixing port to be installed with a wear-resistant pillow block which forms an engaging slot to be pressed by the said constraint section; this provides the benefits of having- durable pillow block, simply replacing the pillow block to have different weight of clutch weight and to have various abutting face with various slope to achieve different engaging force.

### BRIEF DESCRIPTION OF THE DRAWINGS

FIG. 1 is the first illustration of the first embodiment of this invention;
FIG. 2 is the second illustration of the first embodiment of this invention;
FIG. 3 is the explosive structure of the first illustration of the embodiment of this invention;
FIG. 4 is the explosive structure of the second illustration of the first embodiment of this invention;
FIG. 5 is the cross-sectional diagram of the first embodiment of this invention;
FIG. 6 is the illustration of the first embodiment of this invention before the operation of the clutch weight;
FIG. 7 is the first illustration of the first embodiment of this invention during the operation of the clutch weight [the clutch weight is slippery engaging, the constraint section is not actuated];
FIG. 8 is the second illustration of the first embodiment of this invention during the operation of the clutch weight [the constraint section is actuated];
FIG. 9 is the first illustration of the second embodiment of this invention;
FIG. 10 is the second illustration of the second embodiment of this invention;
FIG. 11 is the explosive structure of the first illustration of the second embodiment of this invention;
FIG. 12 is the explosive structure of the second illustration of the second embodiment of this invention;
FIG. 13 is the cross-sectional diagram of the second embodiment of this invention;
FIG. 14 is the illustration of the second embodiment of this invention before the operation of the clutch weight;
FIG. 15 is the illustration of the second embodiment of this invention during the operation of the clutch weight;
FIG. 16 is the illustration of the third embodiment of this invention;
FIG. 17 is the explosive structure of the third illustration of the embodiment of this invention;
FIG. 18 is the illustration of the third embodiment of this invention before the operation of the clutch weight;
FIG. 19 is the first illustration of the third embodiment of this invention during the operation of the clutch weight [the constraint section is not actuated];
FIG. 20 is the second illustration of the third embodiment of this invention during the operation of the clutch weight [the constraint section is actuated];
FIG. 21 is a Table to show the data of static test of engaging force
FIG. 22 is a Table to show the data of field test of this invention vs. original

Explanation of symbols of illustrations: Base carrier 10 ; main driving assembly 11 ; mounting slot 110 ; constraint flange 111 ; associate driven assembly 12; elongated curved slot 120; receiving slot 121 ; retention hole 122 ; retention section 123 ; guide frame 124 ; constraint section 13, 13 A ; round hole 130; rotating wheel 131 ; pivot 14 ; operation-assisting frame 15, 15 A; hook section 150 ; connecting hole 151 ; first hooking section 152 ; second hooking section 153 ; clutch weight 20, 20 A ; engaging slot 21 ; abutting face 210 ; wear pad 22 ; fixing port 23 ; wear-resistant pillow block 24 ; return element 30 ; intermediate corotating element 40, 40 A ; spring-based intermediate corotating element 41 ; driven disk 50 ; rim 51.

### DETAILED DESCRIPTION OF THE PREFERRED EMBODIMENT

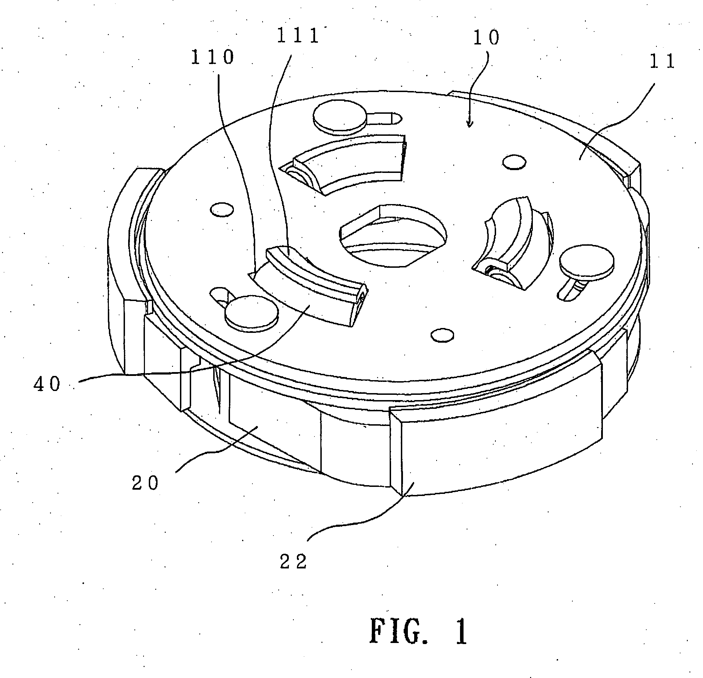

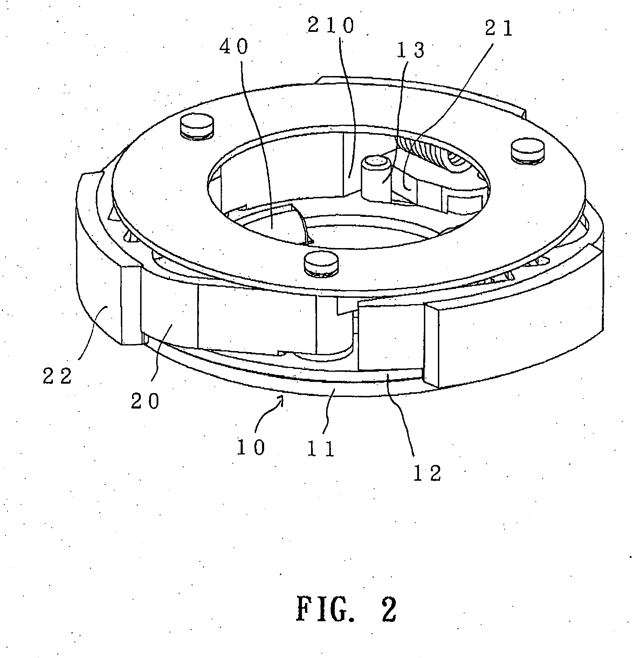

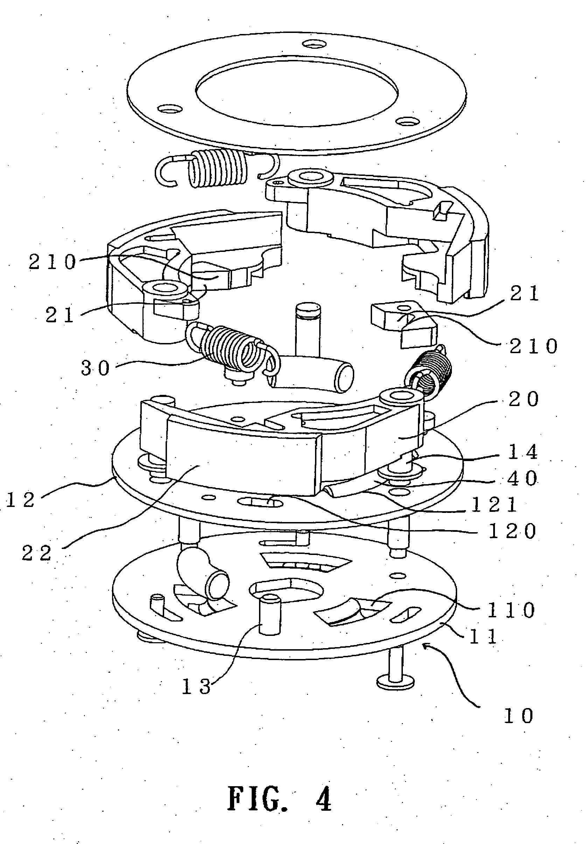

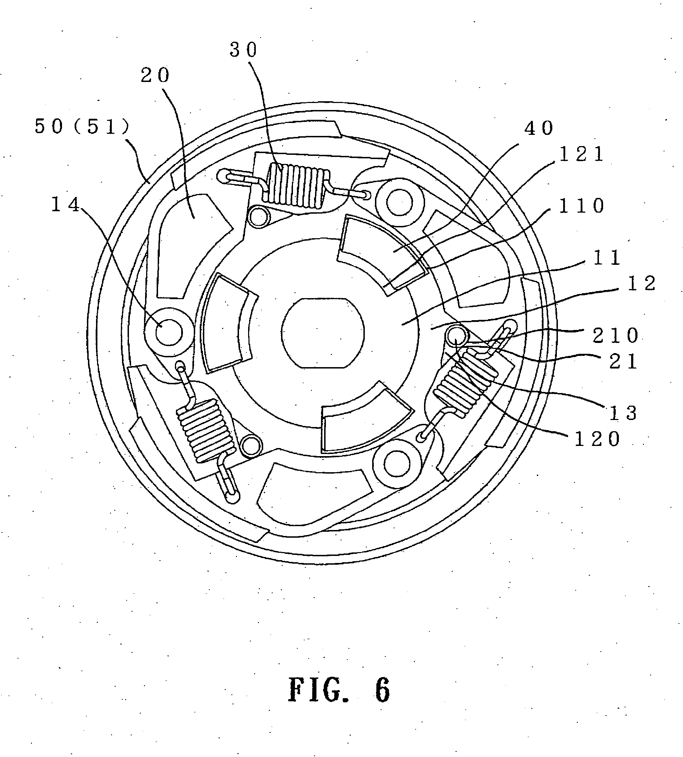

A kind of high performance clutch as shown in FIG. 1, 2, 3, and 4, a base carrier 10 is installed with a plurality of clutch weights 20, and on each of the adjacent clutch weights 20 is connected with return elements 30 as shown in FIG. 6, wherein the said base carrier 10 as shown in FIGS. 1,3, 4, and 6 contains a main driving assembly 11 and an associate driven assembly 12; on the said main driving assembly 11, corresponding to said clutch weights 20, a plurality of constraint sections 13 are installed to make the main driving assembly 11 to drive the associate driven assembly 12 to corotate in an allowed differential driving; a plurality of clutch weights 20 are installed through pivots 14 on the said associate driven assembly 12, and the inner side of each clutch weight 20 corresponding to the said constraint section 13 is formed with an engaging slot 21 to be pressed by the said constraint section 13;

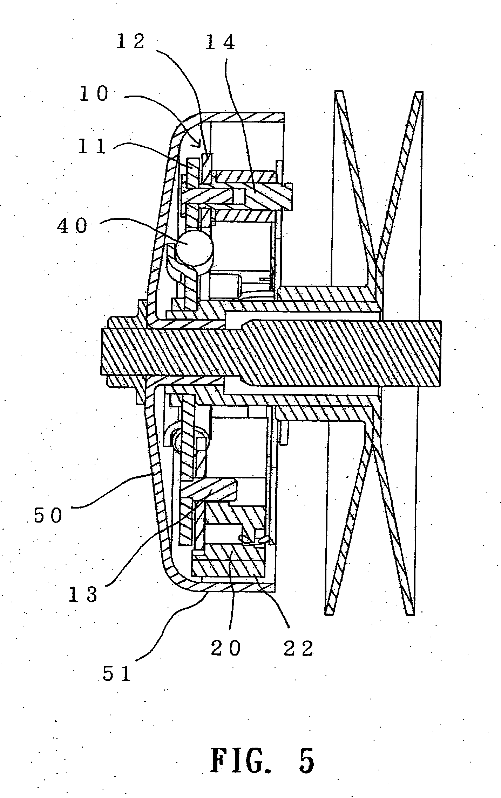

As shown in FIG. 5, when the installed clutch rotates to a certain speed; as shown in FIGS. 6, 7, and 8 then the constraint section 13 of each clutch weight 20 will proceed displacement to press into the inner abutting face 210 of respective clutch weight 20, this pressing action enhances the engaging force of each clutch weight and makes the engagement anti-reversal, thereby the transmission of power is more smooth and more stable.

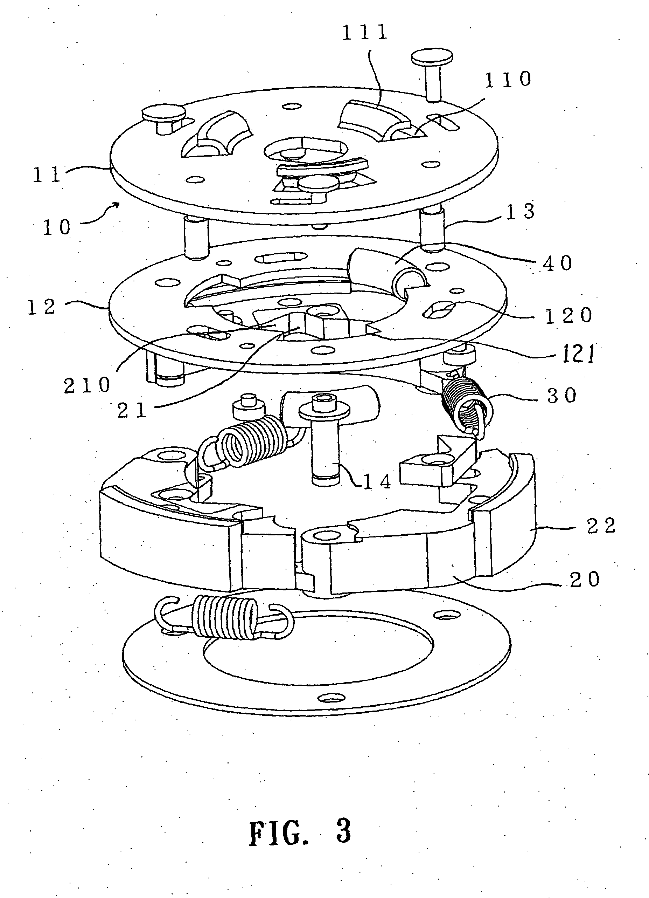

In the more concrete embodiment of the present invention, wherein the said base carrier 10 as shown in FIGS. 3, 4, and 6, including a main driving assembly 11 and an associate driven assembly 12; the said main driving assembly 11 is provided, at locations corresponding to the inside surfaces of the clutch weights 20, with a plurality of pin-like constraint sections 13, respectively, which extend through elongated curved slots 120 formed in the associate driven assembly 1 2; a nd the said main driving assembly 11 is installed with a plurality of mounting slots 110 for the installation of intermediate corotating elements 40;
on the associate driven assembly 12, corresponding to the said mounting slots 110, is formed with a plurality of receiving slots 121;
an intermediate corotating element 40, which is compressible and resilient, is arranged in the paired mounting slot 110 and receiving slot 121;
thereby the main driving assembly 11 drives the associate driven assembly 12 in an allowed differential driving, and the said associate driven assembly 12 is installed with a plurality of clutch weights 20 via pivot 14; and the inner side of each clutch weight 20, corresponding to each said pin-like constraint section 13, is formed with a V-shaped engaging slot 21 to be pressed by the said pin-like constraint section 13; As shown in FIGS. 5, 6, 7 and 8; when the rotation resistance encountered by the associate driven assembly 12 is greater than the transformation setting of intermediate corotating element 40, the intermediate corotating element 40 is deformed; thereby the main driving assembly 11 drives the associate driven assembly 12 to corotate in an allowed differential driving to make the pin-like constraint section 13 to receive the torque transmitted from the engine and to thrust against the abutting face 210 of the engaging slot 21, then the engaging force of clutch weight 20 with the rim 51 of driven disk 50 is enhanced, then the slippage is reduced, the friction heat of wear pad 22 is lower ,thus the clutch is more durable and its power transmission is stable and powerful..

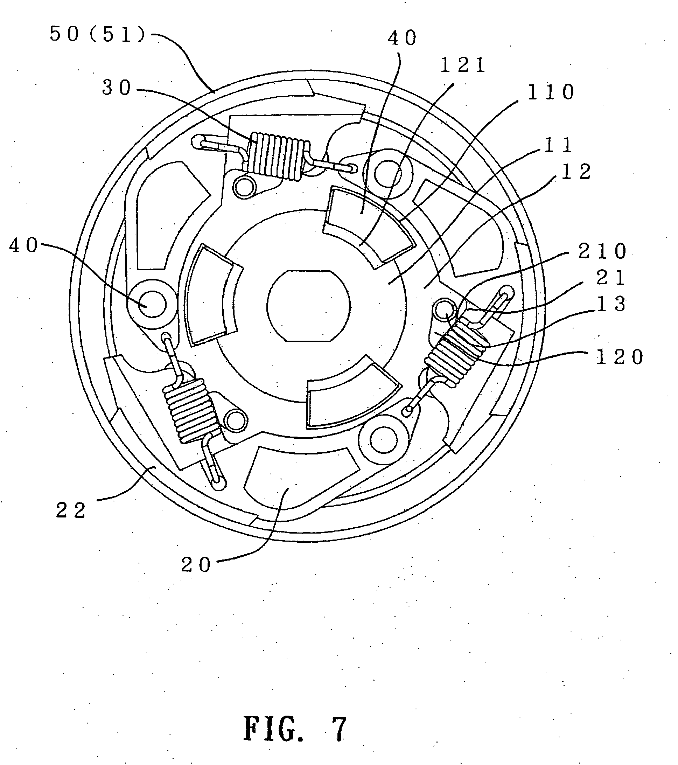

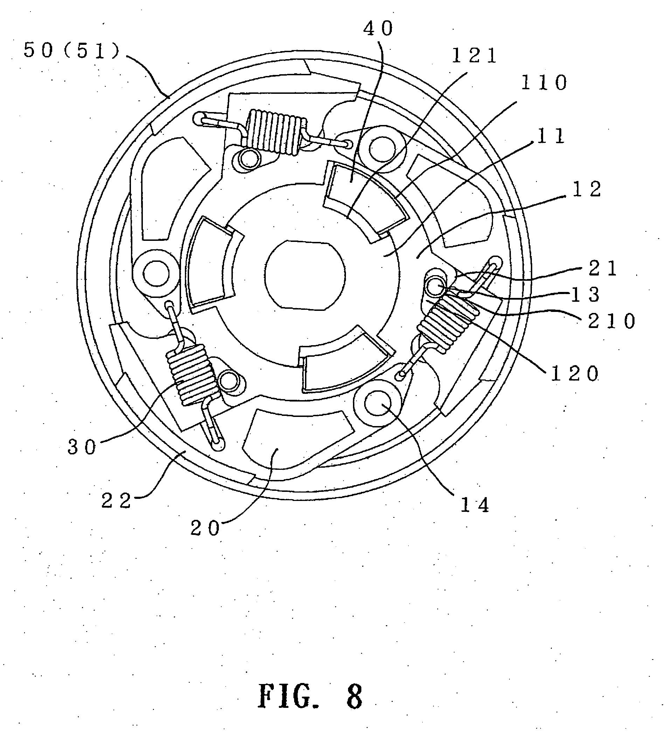

The above described first embodiment of the present invention can be practiced with excellent result with the following structure, wherein the said base carrier 10 as shown in FIGS. 1 and 3 consists of a main driving assembly 11 and an associate driven assembly 12, and on the said main driving assembly 11 a plurality of mounting slots 110 are installed, and along with each mounting slot 110 a constraint flange 111 is formed to prevent the intermediate corotating element 40 from separations; the said intermediate corotating element 40 is one kind of chemical- resistantand compressible plastic material as shown in FIGS. 5 and 6, wherein the rotating main driving assembly 11 drives the associate driven assembly 12 via the said intermediate corotating element 40 to corotate, and when the rotation resistance encountered by the associate driven assembly 12, as shown in FIGS. 7 and 8, is greater than the preset transformation setting of the intermediate corotating element 40, the intermediate corotating element 40 is deformed, and thereby the main driving assembly 11 drives the associate driven assembly 12 in an allowed differential driving, thus the said constraint section 13 receives the torque transmitted from the engine and thrusts onto the abutting face 210 of the V-shaped engaging slot 21 of the clutch weight 20 so the engagement of clutch is enhanced and stabilized.

Based on the above first embodiment, the said intermediate corotating element 40 is installed in the receiving slot 121 of the associate driven assembly 12, and the mounting slot 110 of main driving assembly 11 can be a compression spring, having the equivalent effect of plastic strip.

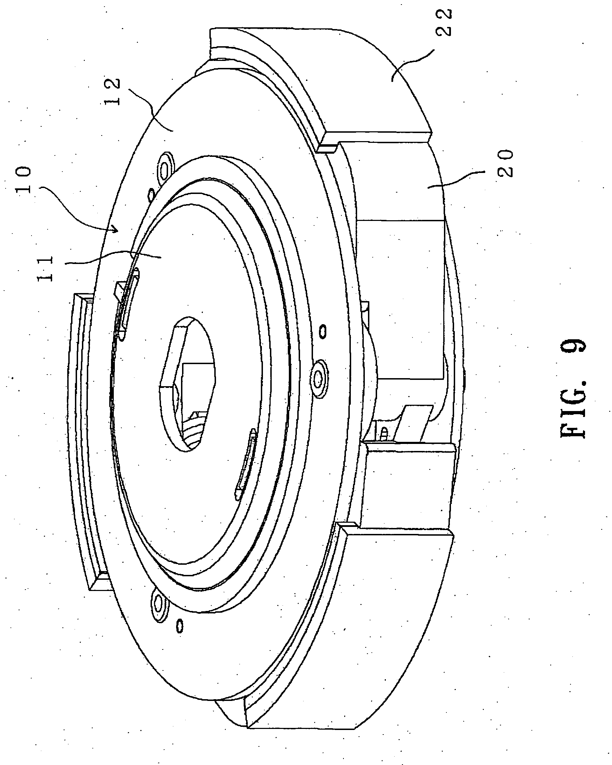

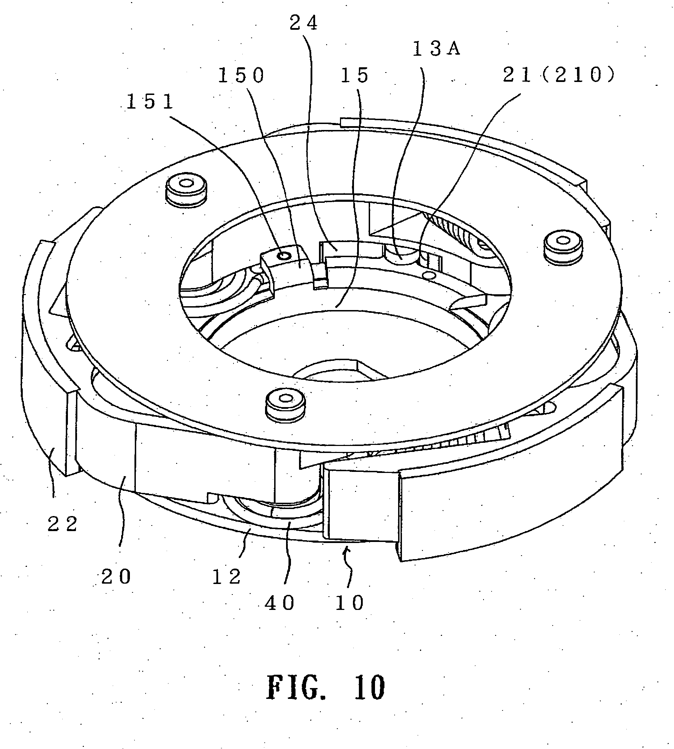

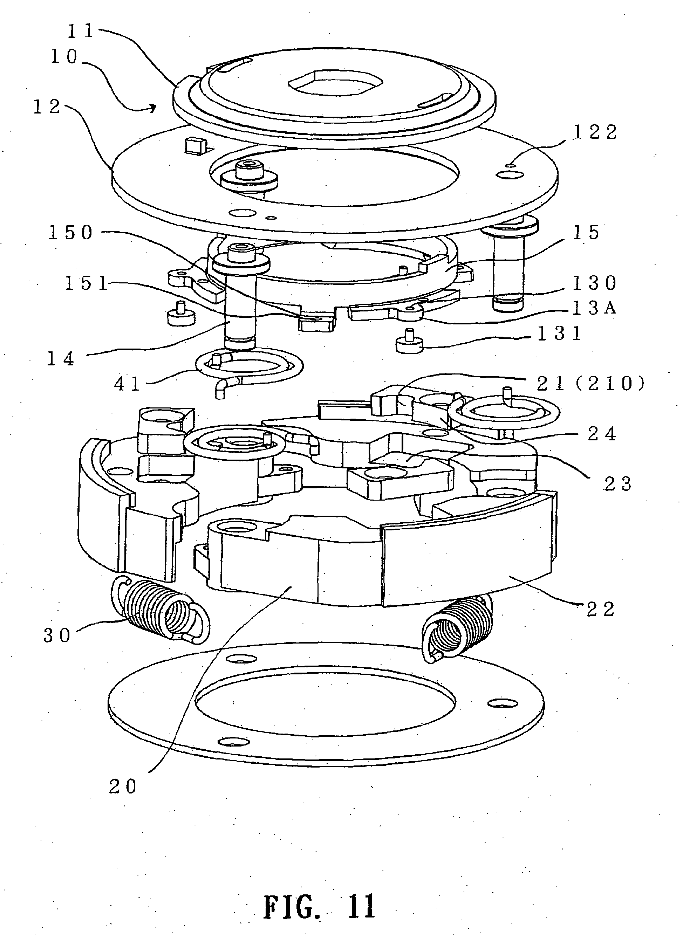

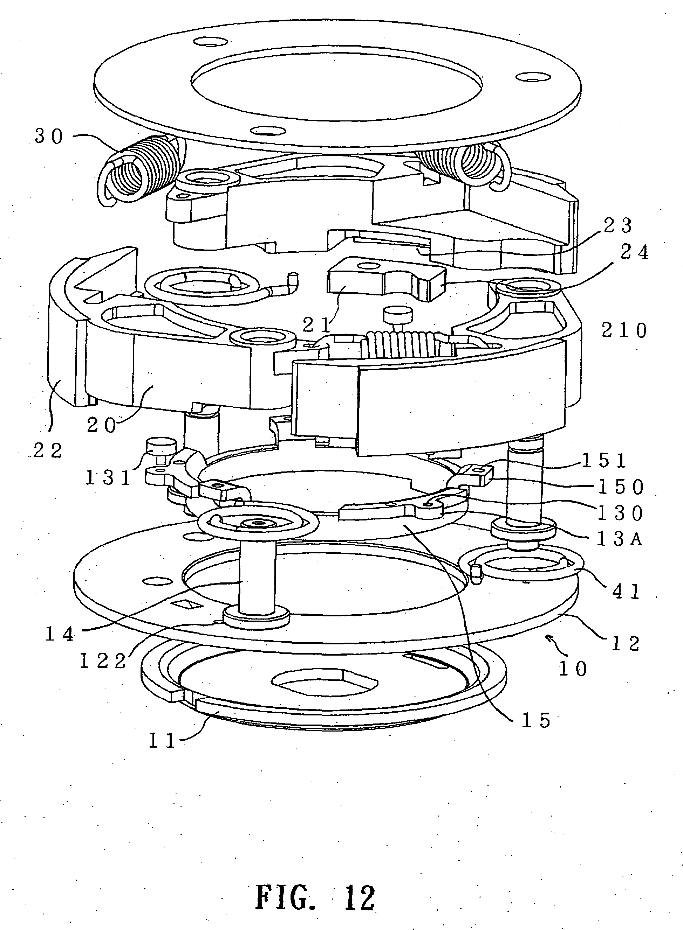

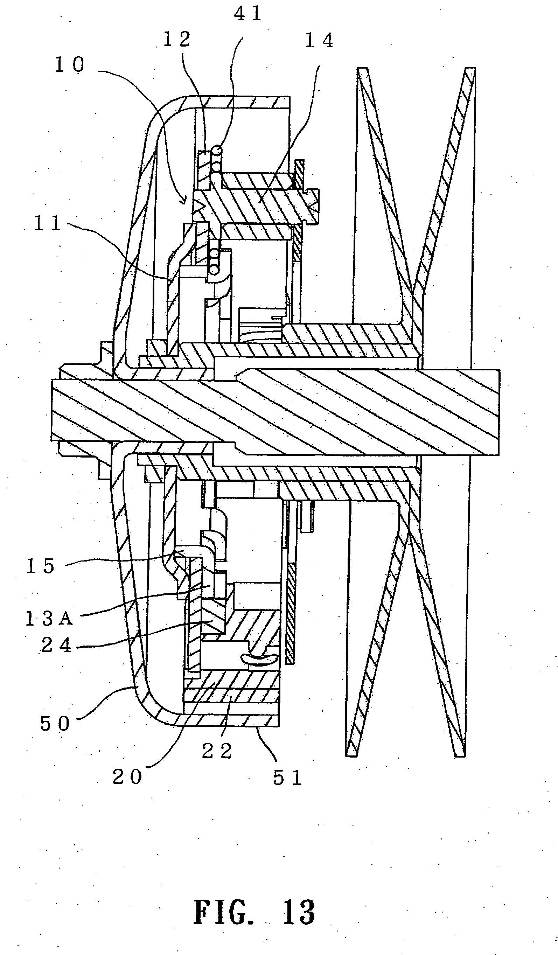

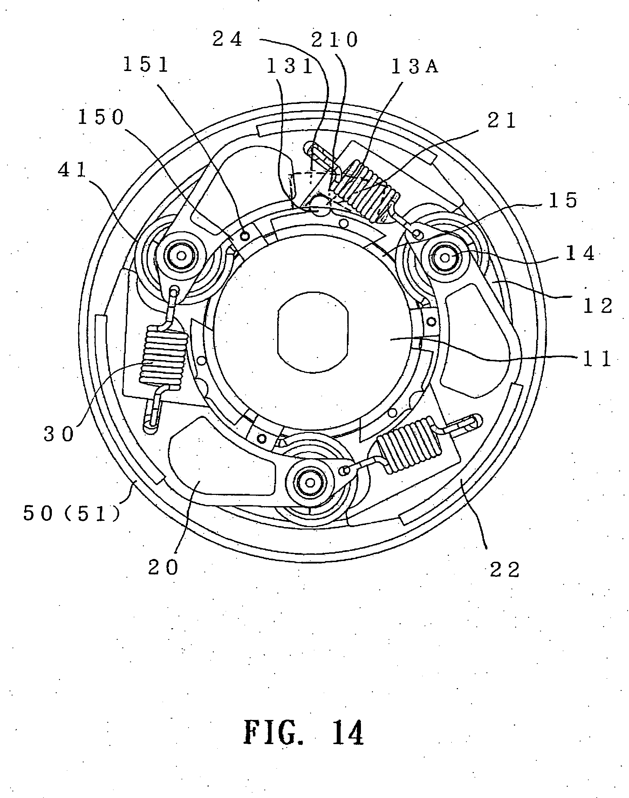

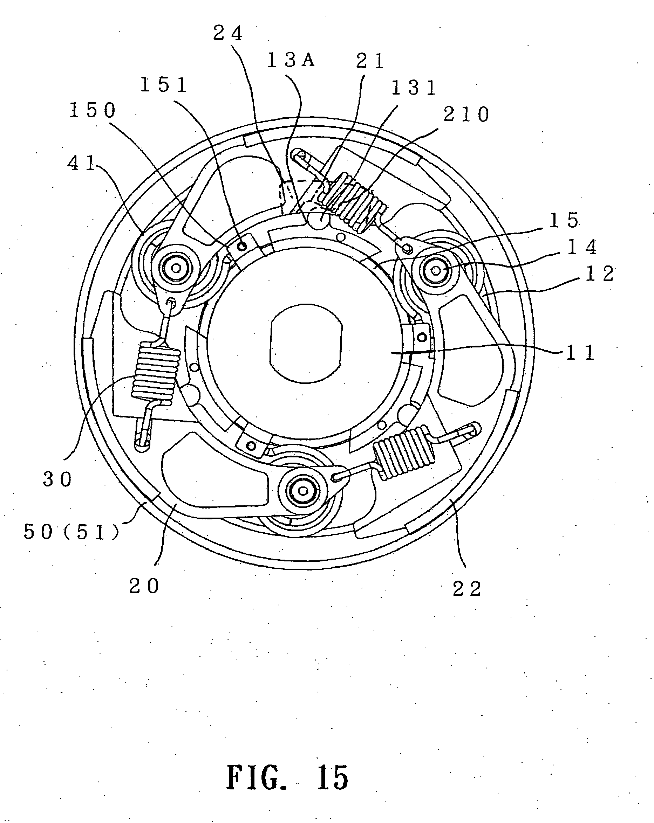

Further, based on the above embodiment, the present invention could achieve a similar effect and function with the following second embodiment; wherein the said base carrier 10, as shown in FIGS. 9, 10, 11, 12, and 14, consists of a main driving assembly 11 and an associate driven assembly 12; the axial inner side of the said main driving assembly 11 is combined with an operation-assisting frame 15 extending through the associate driven assembly 12, on the said operation-assisting frame 1 5, corresponding to the inner side of said clutch weight 20, is formed with a plurality of projecting constraint sections 13A and a plurality of hooking sections 150; each of the said hooking section 150 is installed with a connecting hole 151; on the associate driven assembly 12, corresponding to the said connecting holes 151, is installed with a plurality of retention holes 122, while a spring-based intermediate corotating element 41 is connected between each retention hole 122 and its corresponding connecting hole 151; thereby the main driving assembly 11 could drive the associate driven assembly 12 to corotate in an allowed differential driving, and the said associate driven assembly 12 is installed with a plurality of clutch weights 20 through pivots 14, and each clutch weight 20 corresponding to each projecting constraint section 13A is formed with a V-shaped engaging slot 21 to be pressed by the said projecting constraint section 13A; as shown in FIGS. 13, 14, and 15, when the rotation resistance encountered by the associate driven assembly 12 is greater than the transformation setting of the spring-based intermediate corotating element 41, the spring-based intermediate corotating element 41 is deformed, thereby the corotation of the main driving assembly 11 and the associate driven assembly 12 becomes in an allowed differential driving, enabling the said projecting constraint section 13A of main driving assembly 11 to receive the torque transmitted from the engine and thrust against the abutting face 210 of the V-shaped engaging slot 21 of the clutch weight 20; thus the engagement of clutch weight with the rim 51 of driven disk 50 is enhanced, so the clutch is more durable and the power transmission is more stable. Further, in the embodiment of this structure, wherein as shown in FIGS. 10, 11, 14, and 15, the radial projecting constraint section 13A of the operation-assisting frame 15 of the said main driving assembly 11 is formed with a round hole 130, wherein a rotating wheel is installed in the said round hole and can rotatively thrust onto the V-shaped engaging slot 21 of the clutch weight 20; therefore the abutting face 210 in the V-shaped engaging slot 21 will not be worn out easily.

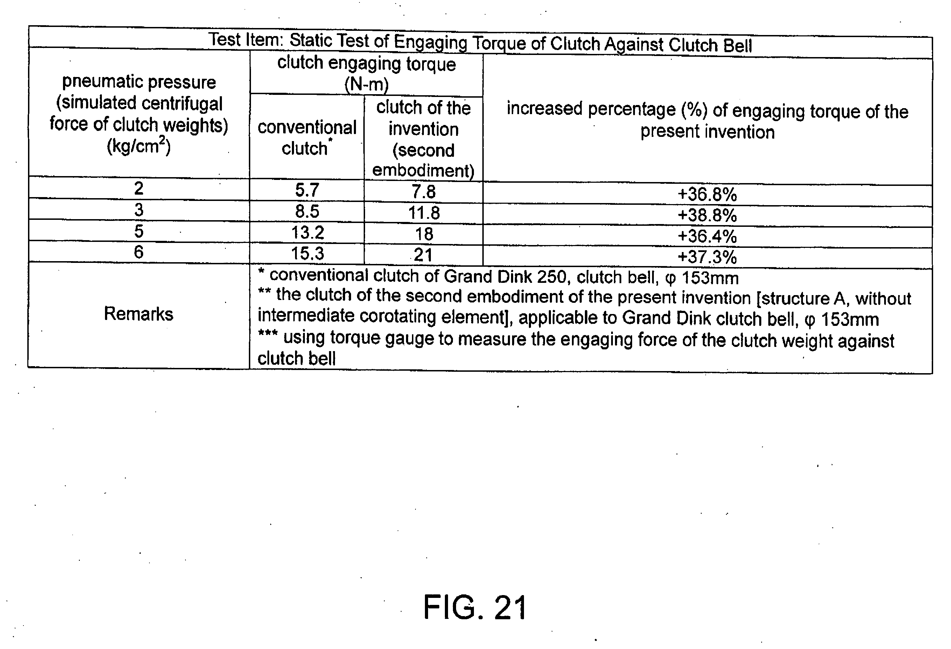

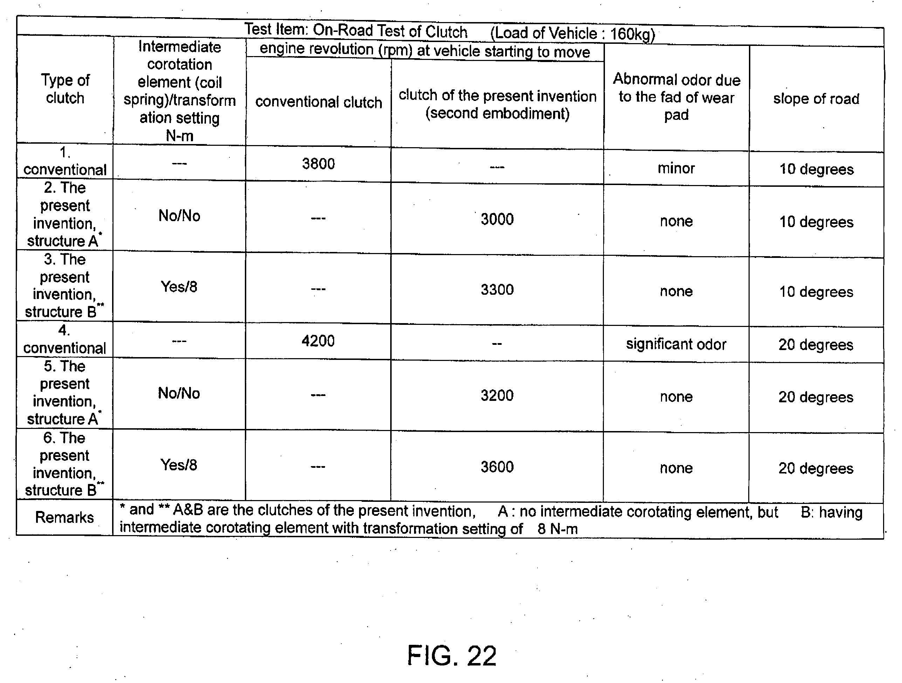

Further, the structure of the second embodiment has been tested with static engaging torque while the result is shown in FIG. 21, and road test or field test with the result shown in FIG. 22; The test results indicate the improvement of the present invention in the performance of clutch. In the engaging torque test shown in FIG. 21, the pressing force, that is induced by the centrifugal force of the clutch weights, against the rim 51 of the driven disk 50 [clutch bell], is simulatively performed with pneumatic force from an air compressor to generate a pressing force substantially identical to the centrifugal force of the clutch weights. After several runs of test, as indicated in the table of Figure 21, under different settings of pneumatic force, the engaging torque that the clutch of the present invention applies to the clutch bell is increased more than 30%.

Further refer to the FIG. 22, the Kymco Grand Dink 250 with two passengers riding on is used for the road test under the condition of roads of different slopes, and the vehicle is accelerated from standstill until the engine starts to move the vehicle. From the data in FIG. 22 it shows that the second embodiment of present invention has stronger engaging torque to the clutch bell; both structure A (not fitted with intermediate corotating element) and structure B (fitted with intermediate corotating element) show the strengthening effect to the engaging force of clutch weight.

The engaging torque of present invention is strong enough to drive the clutch bell to rotate and move the vehicle under low engine revolution. At the same time, the slippage of clutch weight is reduced, the friction heat of clutch pad is reduced, the burnt phenomenon [odd smell] of wear pad is lessen or none, therefore the usable life of clutch is much longer; the test results also prove that the existence of intermediate corotating element and its transformation setting can determine the actuation timing of the allowed differential driving.

Further, the test data also indicate, that due to the engaging force of the conventional clutch weight is weaker, a higher engine revolution is required to drive the clutch bell/outer to rotate, and at the same time the friction slippage of the clutch wear pad is too much and the friction heat of wear pad is too high that the clutch wear pad is faded and worn out easily.

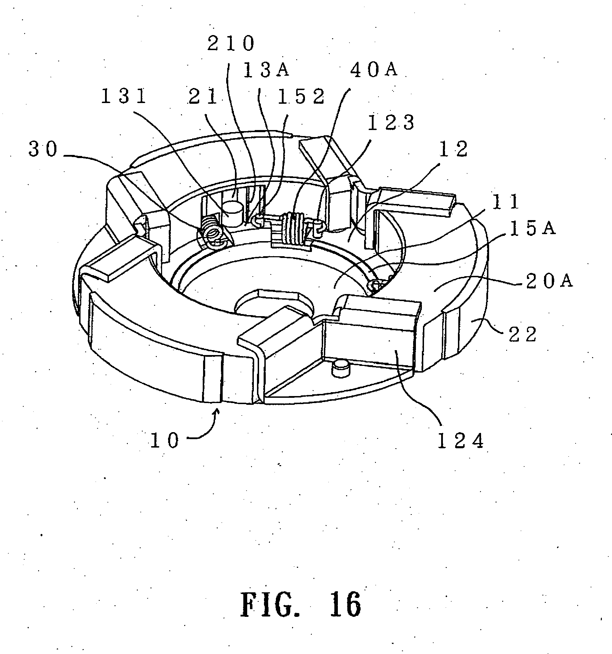

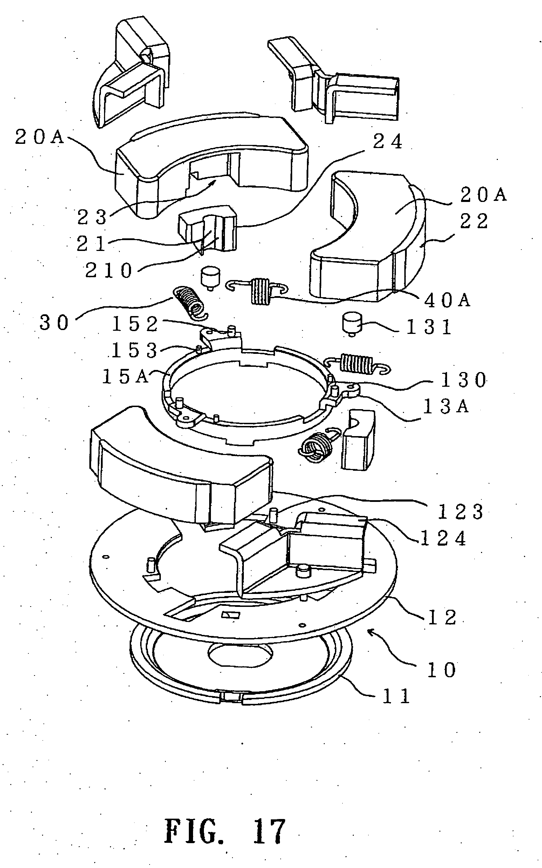

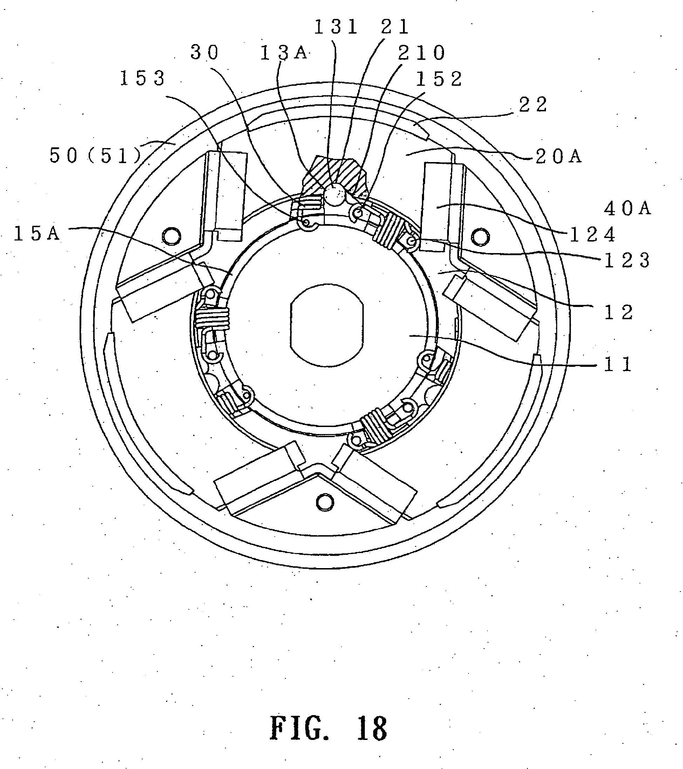

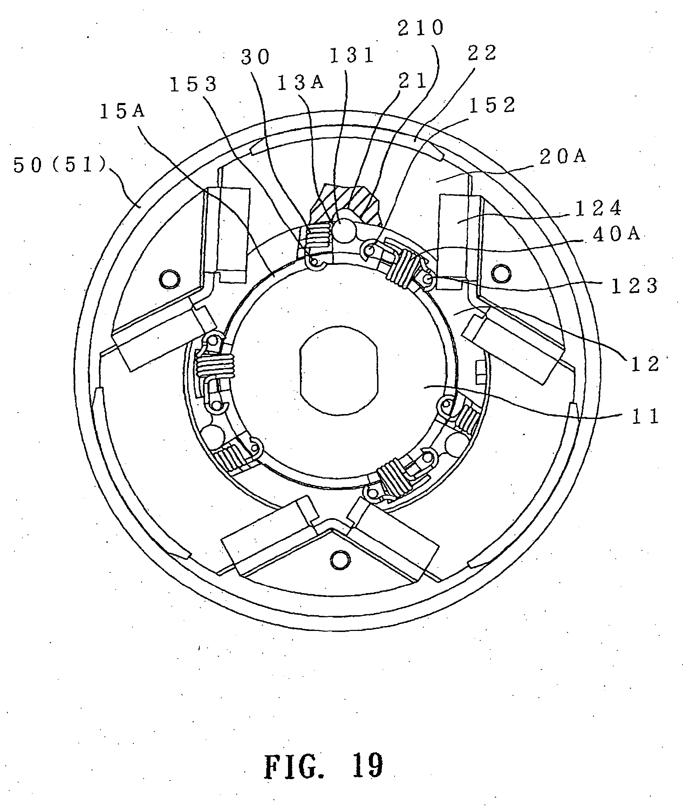

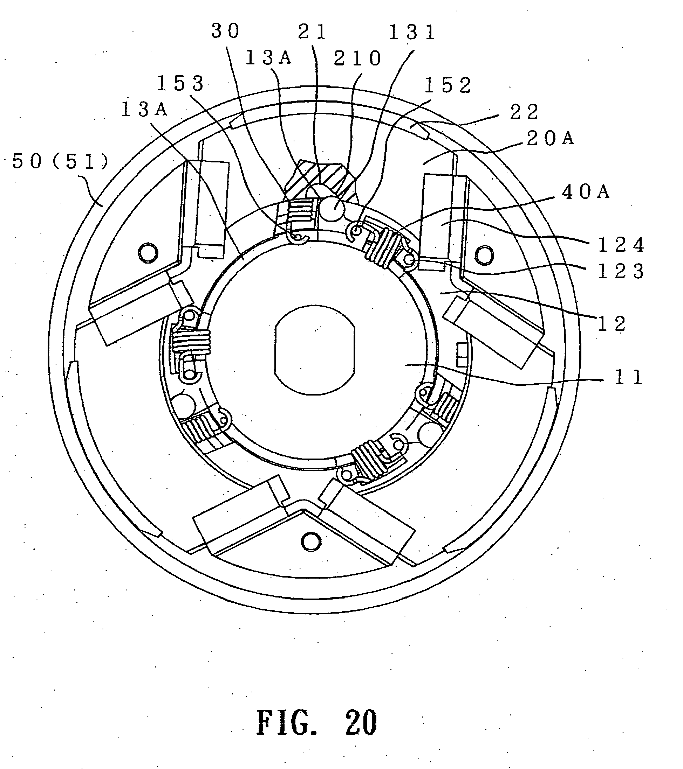

Further, based on the practice of the present invention as discussed above, the present invention can achieve a same effect and function with the following third embodiment thereof, as shown in FIGS. 16, 17, and 18 the said base carrier 10 consists of a main driving assembly 11 and an associate driven assembly 12; the axial inner side of the said main driving assembly is combined with an extended operation-assisting frame 15A, and between the said operation-assisting frame 15A and the associate driven assembly 12 a plurality of intermediate corotating elements 40A are installed, so that the rotating main driving assembly 11 could drive the associate driven assembly 12 to corotate via the intermediate corotating elements 40A; when the rotating resistance encountered by the associate driven assembly 12 is greater than the transformation setting of the intermediate corotating element 40A, the main driving assembly 11 could drive the associate driven assembly 12 in an allowed differential driving, and the actuation timing of this differential driving is determined by the transformation setting of the intermediate corotating element 40A; on the operation-assisted frame 15A of the said main driving assembly 11, corresponding to said clutch weight 20A, is formed with a plurality of projecting constraint sections 13A; the said associate driven assembly 12 is installed with a plurality of clutch weights 20A, and on each clutch weight corresponding to the said projecting constraint section 13A is formed with an engaging slot 21 to be pressed by the said projecting constraint section 13A; as shown in FIGS. 18, 19, and 20, as the rotating base carrier 10 reaches a certain rotating speed, the clutch weight 20A proceeds a centrifugal slippery engagement, and when the rotating resistance encountered by the associate driven assembly 12 is greater than the transformation setting of the intermediate corotating element 40A, an allowed differential driving is actuated between the main driving assembly 11 and the associate driven assembly 12 , so that the projecting constraint section 13A on the main driving assembly 11 will receive the torque transmitted from the engine and thrust against the engaging slot 21 of the clutch weight 20A; therefore the engagement of clutch weight 20A is enhanced and the stability of the power transmission of clutch is enhanced.

The present invention can be practiced in a more detailed construction in accordance with the third embodiment discussed above, wherein the said base carrier 10 shown in FIGS. 16, 17, and 18 consists of a main driving assembly 11 and an associate driven assembly 12; the axial inner side of the said main driving assembly is combined with an extending operation-assisting frame 15A; on the said operation-assisting frame 15A, corresponding to said clutch weights 20A ,is formed with a plurality of projecting constraint section 13A and a plurality of the first hooking sections 152 are installed on the frame 15A respectively; on the associate driven assembly 12, corresponding to the said first hooking sections 152, is installed with a plurality of retention sections 123, while a spring-based corotating element 40A is connected between each retention section 123 and its corresponding first hooking section 152, so as to make the main driving assembly 11 to drive the associate driven assembly 12 in an allowed differential driving; the said associate driven assembly is installed with a plurality of clutch weights 20A, and on the inner side of each clutch weight 20A corresponding to each projecting constraint section 13A is formed with a V-shaped engaging slot 21, so that the said projecting constraint section 13A could thrust onto the V-shaped engaging slot 21; as shown in FIGS. 18, 19, and 20, as the rotating base carrier 10 reaches a certain rotating speed , the clutch weight 20A proceeds a centrifugal slippery engagement, and when the rotating resistance encountered by the associate driven assembly is greater than the transformation setting of the spring-based intermediate corotating element 40A, an allowed differential driving is actuated between the main driving assembly 11 and the associate driven assembly 12, and the projecting constraint section 13A on the main driving assembly 11 will receive the torque transmitted from the engine and thrust onto the abutting face 210 of engaging slot 21 therefore the engagement of clutch weight 20A is enhanced and the stability of the power transmission of clutch is enhanced.

A more detailed structure of the third embodiment of the present invention will be further described, wherein the said base carrier 10 as shown in FIGS. 16, 17, and 19 consists of a main driving assembly 11 and an associate driven assembly 12; the axial inner side of the said main driving assembly 11 is combined with an extending operation-assisting frame 15A; between the said operation-assisting frame 15A and the associate driven assembly 12 a plurality of intermediate corotating elements are installed, so that the main driving assembly 11 could drive the associate driven assembly 12 to corotate in an allowed differential driving, and on the said intermediate corotating element 15A corresponding to the inner side of said clutch weights 20A is formed with a plurality of radial projecting constraint sections 13A, and the said frame 15A is installed with a plurality of the second hooking sections 153; on the said associate driven assembly 12 is installed with a plurality of guide frames 124, and each of the said guide frame is installed with a clutch weight 20A, so that the return element 30 of each clutch weight 20A is connected with the second hooking section 153 of the operation-assisting frame 15A; and on the inner side of each clutch weight 20A corresponding to each projecting constraint section 13A is formed with an engaging slot 21 to be pressed by the said projecting constraint section 13A; as shown in FIGS. 18, 19, and 20, when the rotating speed of base carrier 10 reaches a certain revolution, the clutch weight 13A moves centrifugally outward through the guide frame 124 to proceed the slippery engagement; when the rotating resistance encountered by the associate driven assembly 12 is greater than the transformation setting of the intermediate corotating element 40A, an allowed differential driving is actuated between the main driving assembly 11 and the associate driven assembly 12, and the projecting constraint section 13A of the main driving assembly 11 will receive the torque transmitted from the engine and thrust onto the abutting face 210 of engaging slot 21; thus the engagement of clutch weight 20A with the driven disk 50 is enhanced, and the stability of the power transmission of clutch is enhanced.

Further in the third embodiment example, as shown in FIGS. 16, 17, and 18, wherein the projecting constraint section 13A of the operation-assisting frame 15A of the said main driving assembly 11 (same as the second embodiment example) is formed with a round hole 130 where a rotating wheel 131 is installed, so that the rotating wheel 131 can rotatively press the V-shaped engaging slot 21 of the clutch weight, and the abutting face 210 in the engaging slot will not be worn out easily.

According to the first, second, and third embodiments described above, the present invention can be made more enhanced with the following structure, wherein as shown in FIGS. 10, 11, 12, and 14, on the inner side of said clutch weight 20 corresponding to the said constraint section 13A is formed with a fixing slot 23 where a wear-resistant pillow block 24 made of wear-resistant material is installed, and on the said wear-resistant pillow block 24 is formed with an engaging slot 21 to be pressed by the constraint section 13A; this provides benefits of having durable pillow block, and simply replacing the pillow block 24 can make various weight of clutch weight 20 and various abutting face 210 with different slope to achieve different engaging force.

Although the present invention has been described with reference to the preferred embodiments thereof, it is apparent to those skilled in the art that a variety of modifications and changes may be made without departing from the scope of the present invention which is intended to be defined by the appended claims.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing from the scope as defined by the claims.

## Claims

1. High performance clutch in which a plurality of clutch weights (20, 21A) is installed on a base carrier (10) and each of the said clutch weights (20, 20A) is installed with a return element (30); **characterised in that** the said base carrier (10) contains a main driving assembly (11) and an associate driven assembly (12), the said main driving assembly (11) is formed with one or more constraint sections (13; 13A) corresponding to each clutch weight (20; 20A); thereby enabling the said main driving assembly (11) to drive the said associate driven assembly (12) to corotate in an allowed differential driving; the said associate driven assembly (12) is installed with the said clutch weights (20; 20A) and each clutch weight (20; 20A) is formed with an engaging slot (21) corresponding to each said constraint section (13, 13A) to be pressed by the said constraint section (13; 13A); so that the said constraint section (13; 13A) can receive torque transmitted from an engine and proceeds thrusting into the abutting face (210) of the said engaging slot (21) of the clutch weight (20; 20A); thus the engaging force of each clutch weight (20; 20A) is strengthened, and the stability of power transmission is enhanced.

2. The high performance clutch according to claim 1, wherein a plurality of intermediate corotating elements (40; 40A; 41) are installed between the said main driving assembly (11) and the associate driven assembly (12); thus the s aid associate driven assembly (12) can be driven to corotate by the main driving assembly (11) through the said intermediate corotating elements (40; 40A; 41); when the rotation resistance encountered by the said associate driven assembly (12) is greater than the transformation setting of the said intermediate corotating element (40; 40A; 41), the said intermediate corotating element (40; 40A; 41) will be deformed; thus the said main driving assembly (11) will drive the said associate driven assembly (12) to corotate in an allowed differential driving; the said main driving assembly (11) is installed with a plurality of constraint sections (13; 13A).

3. The high performance clutch according to claim 1 or 2, wherein the said main driving assembly (11) is formed with a plurality of pin-like constraint sections (12) at the positions corresponding to the inner side of each clutch weight (20); the said main driving assembly (11) is installed with a plurality of mounting slots (110) for the constraint sections (13); the said associate driven assembly (12) is formed with receiving slots (121) corresponding to the said mounting slots (110) and a compressible intermediate corotating element (40) is installed between the said mounting slot (110) and said receiving slot (121); the said main driving assembly (11) will drive the said associate driven assembly (12) to corotate in an allowed differential driving; the associate driven assembly (12) is pivotally installed with ead clutch weight (20) which is formed with a V-shaped engaging slot (21) corresponding to each pin-like constraint section (13), thereby make the pin-like constraint section (12) be able to thrust into the V-shaped engaging slot (21).

4. The high performance clutch according to claim 3, wherein a constraint flange (111) is formed along with each said mounting slot (110) to prevent the respective said intermediate corotating element (40) from separation; the said intermediate corotating element (40) is a plastic strip with chemical resistance and compression elasticity.

5. The high performance clutch according to claim 3, wherein the said intermediate corotating element (40) installed between the said mounting slot (110) of the said main driving assembly (11) and the respective receiving slot (121) of the said associate driven assembly (12) is a compression spring.

6. The high performance clutch according to claim 1, wherein one side of the said main driving assembly (11) is combined compositely with an operation-assisting frame (15, 15A) and wherein the complex combination of the said main driving assembly (11) and the said operation-assisting frame (15; 15A) is provided with a plurality of constraint sections (13A) corresponding to each clutch weight respectively, a plurality of intermediate corotating elements (40A; 41) are installed between the complex combination and the associate driven assembly (12); thereby make the said main driving assembly (11), which is combined compositely with the said operation-assisting frame (15; 15A), be able to drive the said associate driven assembly (12) to corotate in an allowed differential driving; an engaging slot (21) is formed on each clutch weight (20; 20A) corresponding to each said constraint section (13A); when the rotation resistance, encountered by the said associate driven assembly (12), is greater than the transformation setting of the said intermediate corotating element (40A; 41), the said intermediate corotating element (40A; 41) will be deformed, thus the said main driving assembly will drive (11) the said associate driven assembly (12) to corotate in an allowed differential driving; thereby the said constraint section (13A), installed on complex combination of the said operation-assisting frame (15; 15A) of the said main driving assembly (11); will receive the torque transmitted from the engine and proceed thrusting into the said abutting face (210) of the said engaging slot (21) of the clutch weight (20; 20A), thus the engaging force of each clutch weight (20; 20A) is strengthened, and the stability of power transmission is enhanced.

7. The high performance clutch according to claim 6, wherein one axial inner side of the said main driving assembly (11) is combined compositely with the operation-assisting frame (15) which is formed with a plurality of projecting constraint sections (13A) corresponding to each clutch weight (20A) respectively and a plurality of hook sections (150), each hook section (150) is formed with a connecting hole (151); The said associate driven assembly (12) is formed with a plurality of retention holes (122) corresponding to the connecting holes (151), and each said connecting hole (151) of the said operation-assisting frame (15) and the corresponding retention hole (122) of the associate driven assembly (12), are connected respectively with opposite ends of a spring-based intermediate corotating element (41); the said main driving assembly (11) will drive the said associate driven assembly (12) to corotate in an allowed differential driving; the said associate driven assembly (12) is pivotally installed with a plurality of clutch weights (20) and each said clutch weight (20) is formed with an engaging slot (21) corresponding to each said projecting constraint section (13A), thereby make the said projecting constraint section (13A) be able to thrust into the said engaging slot (21).

8. The high performance clutch according to claim 7, wherein one axial inner side of the said main driving assembly (11) is combined compositely with an operation-assisting frame (15) which is extending through the said associate driven assembly (12) and is formed with a plurality of radial projecting constraint sections (13A) corresponding to each clutch weight (20) respectively, and with a plurality of hook sections (150); each said hook section (150) is formed with a connecting hole (151); the said associate driven assembly (12) is formed with a plurality of retention holes (122) corresponding to the said connecting holes (151), and each said connecting hole (151) of the said operation-assisting frame (15) and the corresponding said retention hole (122) of the said associate driven assembly (12) are connected with opposite ends of a helical spring intermediate corotating element (41) respectively; the said main driving assembly (11) will drive the said associate driven assembly (12) to corotate in an allowed differential driving; and the said associate driven assembly (12) is pivotally installed with every clutch weight (20) which is formed with a V-shaped engaging slot (21) corresponding to each projecting constraint section (13A), thereby make the said projecting constraint sections (13A) be able to thrust into the said V-shaped engaging slots (21).

9. The high performance clutch according to claim 8, wherein the said connecting hole (151) of the said radial hook section (150) on the said operating-asisiting frame (15) of the said main driving assembly (11), and the said retention hole (122) of the said associate driven assembly (12) are provided for two opposite ends of a helical spring-based intermediate corotating element (41) to connect with; the said helical spring-based intermediate corotating element (41) is mounted to the pivot at the same time when the said clutch weight (20) is mounted to the pivot, so as to avoid any offsetting shifting of the said helical spring-based intermediate corotating element (41) and to constitute the positioning thereof.

10. The clutch according to claim 6, wherein one axial inner side of the said main driving assembly is combined compositely with an operation-assisting frame (15A), which is extending through the said associate driven assembly (12); a plurality of intermediate corotating elements (40A) are arranged between the said operation-assisting frame (15A) and the said associate driven assembly (12); whereby the said rotating main driving assembly (11) will drive the said associate driven assembly (12) to corotate through the intermediate corotating elements (40A); when the rotating resistance encountered by the said associate driven assembly (12) is greater than the transformation setting of the said intermediate corotating element (40A), the intermediate corotating element (40A) will be deformed thus the said main driving assembly (11) will drive the said associate driven assembly (12) to corotate in an allowed differential driving; the said operation-assisting frame (15A) is formed with a plurality of radial projecting constraint sections (13A) corresponding to each clutch weight (20A) respectively; the said associate driven assembly (12) is pivotally installed with each clutch weight (20A) which is formed with an engaging slot (21) corresponding to each said radial projecting constraint section (13A), and make the said radial projecting constraint section (13A) be able to thrust into the said engaging slot (21).

11. The high performance clutch according to claim 10, wherein one axial inner side of the said main driving assembly (11) is compositely combined with an operation-assisting frame (15A), which is extending through the said associate driven assembly (12); the said operation assisting frame (15A) of said main driving assembly (11) is formed with a plurality of radial projecting constraint sections (13A) corresponding to clutch weights (20A) respectively; a plurality of first hooking sections (152) are formed on the said operation-assisting frame (15A), the said associate driven assembly (12) is formed with a plurality of retention sections (123) corresponding to the said first hooking sections (152), and both opposite ends of each spring-based intermediate corotating element (40A) are connecting with each corresponding said retention section (123) and corresponding said first hooking section (152); thereby the said main driving assembly (11) will drive the said associate driven assembly (12) to rotate in an allowed differential driving; the said associate driven assembly (12) is pivotally installed with each clutch weight (20A) which is formed with a V-shaped engaging slot (21) corresponding to each said projecting constraint section (13A) and thereby make the said projecting constraint section (13A) be able to thrust into the said V-shaped engaging slot (21).

12. The high performance clutch according to clam 10, wherein the said base carrier (10) contains a main driving assembly (11) and an associate driven assembly (12); one axial inner side of the said main driving assembly (11) is combined compositely with an operation-assisting frame (15A), which is extending through the said associate driven assembly (12); a plurality of intermediate corotating elements (40A) are arranged between the said operation-assisting frame (15A) and the said associate driven assembly (12); thereby the said main driving assembly (11) will drive the said associate driven assembly (12) to corotate in an allowed differential driving; the said operation-assisting frame (15A) of the said main driving assembly (11) is formed with a plurality of radial projecting constraint sections (13A) corresponding to each clutch weight (20A) respectively; a plurality of second hooking sections (153) are formed on the operation-assisting frame (15A) the said associate driven assembly (12) is formed with a plurality of guide frames (124) for mounting the clutch weights (20A) respectively; each clutch weight (20A) is installed with a return element (40A) that connects with the corresponding said second hooking section (153) of the said operation-assisting frame (15A); each clutch weight (20A) is formed with an engaging slot (21) corresponding to each said projecting constraint section (13A) thereby make the said projecting constraint section (13A) be able to thrust into the said engaging slot (21).

13. The high performance clutch according to claim 7 or 10, wherein the said radial projecting constraint section (13A) of the operation-assisting frame of the said main driving assembly (11) is fitted with a small round hole (130), and the said small round hole (130) is installed with a small rotating wheel (131).

14. The performance clutch according to claim 1, wherein each said clutch weight (20); is formed, in its inside surface, with a fixing port (23) corresponding to each said constraint section (13A); a wear-resistant pillow block (24) made of wear-resistant material is installed in the said fixing port (23); the wear-resistant pillow block (24) is formed with an engaging slot (21), and make the said engaging slot (21) is pressed by each constraint section respectively (13A).

15. A high performance clutch according to claim 1, wherein the said return element (40A) is an extension spring.

## Patentansprüche

1. Hochleistungskupplung, bei der eine Mehrzahl von Kupplungsgewichten (20, 20A) an einem Basisträger (10) montiert ist und jedes der Kupplungsgewichte (20, 20A) mit einem Rückstellelement (30) montiert ist, **dadurch gekennzeichnet, dass** der Basisträger (10) eine Hauptantriebsanordnung (11) und eine zugehörige getriebene Anordnung (12) aufweist, die Hauptantriebsanordnung (11) mit einem oder mehreren Beschränkungsabschnitten (13, 13A) ausgebildet ist, die mit jedem Kupplungsgewicht (20, 20A) korrespondieren, wodurch ermöglicht wird, dass die Hauptantriebsanordnung (11) die zugehörige getriebene Anordnung (12) antreibt, um in einem zugelassenen Differenzialantrieb mitzurotieren, wobei die zugehörige getriebene Anordnung (12) mit den Kupplungsgewichten (20, 20A) montiert ist und jedes Kupplungsgewicht (20, 20A) mit einer Eingriffsaussparung (21) ausgebildet ist, die mit jedem Beschränkungsabschnitt (13, 13A) korrespondiert, um von dem Beschränkungsabschnitt (13, 13A) gedrückt zu werden, so dass der Beschränkungsabschnitt (13, 13A) von einem Motor übertragenes Drehmoment aufnehmen kann und weiter gegen die Stirnfläche (210) der Eingriffsaussparung (21) des Kupplungsgewichtes (20, 20 A) drückt, wodurch die Eingriffskraft jedes Kupplungsgewichtes (20, 20A) verstärkt wird und die Stabilität der Kraftübertragung verbessert wird.

2. Die Hochleistungskupplung gemäß Anspruch 1, wobei eine Mehrzahl von mitrotierenden Zwischenelementen (40, 40A, 41) zwischen der Hauptantriebsanordnung (11) und der zugehörigen getriebenen Anordnung (12) montiert ist, wodurch die zugehörige getriebene Anordnung (12) von der Hauptantriebsvorrichtung (11) durch die mitrotierenden Zwischenelemente (40, 40A, 41) zum Mitrotieren angetrieben werden kann, wobei, wenn der Rotationswiderstand, auf den die zugeordnete getriebene Anordnung (12) stößt, größer als die Umsetzungseinstellung des mitrotierenden Zwischenelements (40, 40A, 41) ist, das mitrotierende Zwischenelement (40, 40A, 41) verformt wird, wodurch die Hauptantriebsanordnung (11) die zugehörige getriebene Anordnung (12) antreibt, in einem zugelassenen Differentialantrieb mitzurotieren, wobei die Hauptantriebsanordnung (11) mit einer Mehrzahl von Beschränkungsabschnitten (13, 13A) montiert ist.

3. Die Hochleistungskupplung gemäß Anspruch 1 oder 2, wobei die Hauptantriebsanordnung (11) mit einer Mehrzahl von stiftartigen Beschränkungsabschnitten (13) an den Positionen ausgebildet ist, die mit der Innenseite jedes Kupplungsgewichts (20) korrespondieren, wobei die Hauptantriebsanordnung (11) mit einer Mehrzahl von Montageaussparungen (110) für die Beschränkungsabschnitte (13) montiert ist, die zugehörige getriebene Anordnung (12) mit Aufnahmeaussparungen (121) ausgebildet ist, die mit den Montageaussparungen (110) korrespondieren, und ein komprimierbares mitrotierendes Zwischenelement (40) zwischen der Montageaussparung (110) und dem Aufnahmeschlitz (121) installiert ist, wobei die Hauptantriebsanordnung (11) die zugehörige getriebene Anordnung (12) antreibt, in einem zugelassenen Differentialantrieb mitzurotieren, wobei die zugehörige getriebene Anordnung (12) mit jedem Kupplungsgewicht (20) drehbar gelagert ist, das mit einer V-förmigen Eingriffsaussparung (21) ausgebildet ist, die mit jedem stiftartigen Beschränkungsabschnitt (13) korrespondiert, wodurch bewirkt wird, dass der stiftartige Beschränkungsabschnitt (13) in die V-förmige Eingriffsaussparung (21) drückt.

4. Die Hochleistungskupplung gemäß Anspruch 3, wobei ein Beschränkungsflansch (111) zusammen mit jeder Montageaussparung (110) ausgebildet ist, um ein Trennen des jeweiligen mitrotierenden Zwischenelements (40) zu verhindern, wobei das mitrotierende Zwischenelement (40) ein Kunststoffstreifen mit Chemikalienbeständigkeit und Druckelastizität ist.

5. Die Hochleistungskupplung gemäß Anspruch 3, wobei das mitrotierende Zwischenelement (40), das zwischen der Montageaussparung (110) der Hauptantriebsanordnung (11) und der jeweiligen Aufnahmeaussparung (121) der zugehörigen getriebenen Anordnung (12) montiert ist, eine Druckfeder ist.

6. Die Hochleistungskupplung gemäß Anspruch 1, wobei eine Seite der Hauptantriebsanordnung (11) zusammengesetzt mit einem Betriebsunterstützungsrahmen (15, 15A) kombiniert ist und wobei die komplexe Kombination der Hauptantriebsanordnung (11) und des Betriebsunterstützungsrahmens (15, 15A) mit einer Mehrzahl von Beschränkungsabschnitten (13A) versehen ist, die jeweils mit jedem Kupplungsgewicht korrespondieren, eine Mehrzahl von mitrotierenden Zwischenelementen (40A, 41) zwischen der komplexen Kombination und der zugehörigen getriebenen Anordnung (12) montiert ist, wodurch bewirkt wird, dass die Hauptantriebsanordnung (11), die zusammengesetzt mit dem Betriebsunterstützungsrahmen (15, 15A) kombiniert ist, fähig ist, die zugehörige getriebene Anordnung (12) anzutreiben, in einem zugelassenen Differentialantrieb mitzurotieren, eine Eingriffsaussparung (21) an jedem Kupplungsgewicht (20, 20A) ausgebildet ist, die mit jedem Beschränkungsabschnitt (13A) korrespondiert, wobei, wenn der Rotationswiderstand, auf den die zugehörige getriebene Anordnung (12) stößt, größer als die Umsetzungseinstellung des mitrotierenden Zwischenelements (40A, 41) ist, das mitrotierende Zwischenelement (40A, 41) verformt wird, wodurch die Hauptantriebsanordnung (11) die zugehörige getriebene Anordnung (12) antreibt, in einem zugelassenen Differentialantrieb mitzurotieren, wodurch der Beschränkungsabschnitt (13A), der an der komplexen Kombination des Betriebsunterstützungsrahmens (15, 15A) montiert ist, das von dem Motor übertragene Drehmoment aufnimmt und weiter gegen die Stirnfläche (210) der Eingriffsaussparung (21) des Kupplungsgewichtes (20, 20A) drückt, wodurch die Eingriffskraft jedes Kupplungsgewichtes (20, 20A) verstärkt wird und die Stabilität der Kraftübertragung verbessert wird.

7. Die Hochleistungskupplung gemäß Anspruch 6, wobei eine axiale Innenseite der Hauptantriebsanordnung (11) zusammengesetzt mit dem Betriebsunterstützungsrahmen (15) kombiniert ist, der mit einer Mehrzahl von hervorstehenden Beschränkungsabschnitten (13A), die jeweils mit jedem Kupplungsgewicht (20A) korrespondieren, und mit einer Mehrzahl von Hakenabschnitten (150) ausgebildet ist, wobei jeder Hakenabschnitt (150) mit einem Anschlussloch (151) ausgebildet ist, wobei die zugehörige getriebene Anordnung (12) mit einer Mehrzahl von Haltelöchern (122) ausgebildet ist, die mit den Anschlusslöchern (151) korrespondieren, und jedes Anschlussloch (151) des Betriebsunterstützungsrahmens (15) und das korrespondierende Halteloch (122) der zugehörigen getriebenen Anordnung (12) jeweils mit entgegengesetzten Enden eines federbasierten mitrotierenden Zwischenelements (41) verbunden sind, wobei die Hauptantriebsanordnung (11) die zugehörige getriebene Anordnung (12) antreibt, um in einem zugelassenen Differentialantrieb mitzurotieren, wobei die zugehörige getriebene Anordnung (12) mit einer Mehrzahl von Kupplungsgewichten (20) drehbar gelagert ist und jedes Kupplungsgewicht (20) mit einer Eingriffsaussparung (21) ausgebildet ist, die mit jedem hervorstehenden Beschränkungsabschnitt (13A) korrespondiert, wodurch bewirkt wird, dass der hervorstehende Beschränkungsabschnitt (13A) in die Eingriffsaussparung (21) drücken kann.

8. Die Hochleistungskupplung gemäß Anspruch 7, wobei eine axiale Innenseite der Hauptantriebsanordnung (11) zusammengesetzt mit einem Betriebsunterstützungsrahmen (15) kombiniert ist, der sich durch die zugehörige getriebene Anordnung (12) hindurch erstreckt und mit einer Mehrzahl von radial hervorstehenden Beschränkungsabschnitten (13A), die jeweils mit jedem Kupplungsgewicht (20) korrespondieren, und mit einer Mehrzahl von Hakenabschnitten (150) ausgebildet ist, wobei jeder Hakenabschnitt (150) mit einem Anschlussloch (151) ausgebildet ist, wobei die zugehörige getriebene Anordnung (12) mit einer Mehrzahl von Haltelöchern (122) ausgebildet ist, die mit den Anschlusslöchern (151) korrespondieren, und jedes Anschlussloch (151) des Betriebsunterstützungsrahmens (15) und das korrespondierende Halteloch (122) der zugehörigen getriebenen Anordnung (12) jeweils mit entgegengesetzten Enden eines mitrotierenden Schraubenfeder-Zwischenelements (41) verbunden sind, die Hauptantriebsanordnung (11) die zugehörige getriebene Anordnung (12) antreibt, in einem zugelassenen Differentialantrieb mitzurotieren, und die zugehörige getriebene Anordnung (12) mit jedem Kupplungsgewicht (20) drehbar gelagert ist, das mit einer V-förmigen Eingriffsaussparung (21) ausgebildet ist, die mit jedem hervorstehenden Beschränkungsabschnitt (13A) korrespondiert, wodurch bewirkt wird, dass die hervorstehenden Beschränkungsabschnitte (13A) in die v-förmigen Eingriffsaussparungen (21) drücken können.

9. Die Hochleistungskupplung gemäß Anspruch 8, wobei das Anschlussloch (151) des radialen Hakenabschnitts (150) an dem Betriebsunterstützungsrahmen (15) der Hauptantriebsanordnung (11) und das Halteloch (122) der zugehörigen getriebenen Anordnung (12) zum verbinden für zwei entgegengesetzte Enden eines schraubenfederbasierten mitrotierenden Zwischenelements (41) vorgesehen sind, das schraubenfederbasierte mitrotierende Zwischenelement (41) gleichzeitig an dem Drehzapfen montiert ist, wenn das Kupplungsgewicht (20) an dem Drehzapfen montiert ist, um jegliche Verlagerungsbewegung des schraubenfederbasierten mitrotierenden Zwischenelements (41) zu vermeiden und die Positionierung davon zu bilden.

10. Die Kupplung gemäß Anspruch 6, wobei eine axiale Innenseite der Hauptantriebsanordnung zusammengesetzt mit einem Betriebsunterstützungsrahmen (15A) kombiniert ist, der sich durch die zugehörige getriebene Anordnung (12) hindurch erstreckt, eine Mehrzahl von mitrotierenden Zwischenelementen (40A) zwischen dem Betriebsunterstützungsrahmen (15A) und der zugehörigen getriebenen Anordnung (12) angeordnet ist, wodurch die rotierende Hauptantriebsanordnung (11) die zugehörige getriebene Anordnung (12) antreibt, durch die mitrotierenden Zwischenelemente (40A) mitzurotieren, wobei, wenn der Rotationswiderstand, auf den die zugehörige getriebene Anordnung (12) stößt, größer als die Umsetzungseinstellung des mitrotierenden Zwischenelements (40B) ist, das mitrotierende Zwischenelement (40B) verformt wird, so dass die Hauptantriebsanordnung (11) die zugehörige getriebene Anordnung (12) antreibt, in einem zugelassenen Differentialantrieb mitzurotieren, der Betriebsunterstützungsrahmen (15A) mit einer Mehrzahl von radial hervorstehenden Beschränkungsabschnitten (13A) ausgebildet ist, die jeweils mit jedem Kupplungsgewicht (20A) korrespondieren, die zugehörige getriebene Anordnung (12) mit jedem Kupplungsgewicht (20A) drehbar gelagert ist, das mit einer Eingriffsaussparung (21) ausgebildet ist, die mit jedem radial hervorstehenden Beschränkungsabschnitt (13A) korrespondiert, wobei bewirkt wird, dass der radial hervorstehende Beschränkungsabschnitt (13A) in die Eingriffsaussparung (21) drücken kann.

11. Die Hochleistungskupplung gemäß Anspruch 10, wobei eine axiale Innenseite der Hauptantriebsanordnung (11) mit einem Betriebsunterstützungsrahmen (15A) zusammengesetzt kombiniert ist, der sich durch die zugehörige getriebene Anordnung (12) hindurch erstreckt, wobei der Betriebsunterstützungsrahmen (15A) der Hauptantriebsanordnung (11) mit einer Mehrzahl von radial hervorstehenden Beschränkungsabschnitten (13A) ausgebildet ist, die jeweils mit Kupplungsgewichten (20A) korrespondieren, eine Mehrzahl von ersten Einhakabschnitten (152) an dem Betriebsunterstützungsrahmen (15A) ausgebildet ist, die zugehörige getriebene Anordnung (12) mit einer Mehrzahl von Halteabschnitten (123) ausgebildet ist, die mit den ersten Einhakabschnitten (152) korrespondieren, und beide entgegengesetzten Enden jedes federbasierten mitrotierenden Zwischenelements (40A) mit jedem korrespondierenden Halteabschnitt (123) verbunden sind und mit dem ersten Einhakabschnitt (152) korrespondieren, wodurch die Hauptantriebsanordnung (11) die zugehörige getriebene Anordnung (12) antreibt, in einem zugelassenen Differentialantrieb zu rotieren, wobei die zugehörige getriebene Anordnung (12) mit jedem Kupplungsgewicht (20A) drehbar gelagert ist, das mit einer V-förmigen Eingriffsaussparung (21) ausgebildet ist, die mit jedem hervorstehenden Beschränkungsabschnitt (13A) korrespondiert, und **dadurch** bewirkt wird, dass der hervorstehende Beschränkungsabschnitt (13A) in die V-förmige Eingriffsaussparung (21) zu drücken.

12. Die Hochleistungskupplung gemäß Anspruch 10, wobei der Basisträger (10) eine Hauptantriebsanordnung (11) und eine zugehörige getriebene Anordnung (12) aufweist, eine axiale Innenseite der Hauptantriebsanordnung (11) zusammengesetzt mit einem
Betriebsunterstützungsrahmen (15A) kombiniert ist, der sich durch die zugehörige getriebene Anordnung (12) hindurch erstreckt, eine Mehrzahl von mitrotierenden Zwischenelementen (40A) zwischen dem Betriebsunterstützungsrahmen (15A) und der zugehörigen getriebenen Anordnung (12) angeordnet sind, wodurch die Hauptantriebsanordnung (11) die zugehörige getriebene Anordnung (12) antreibt, in einem zugelassenen Differentialantrieb mitzurotieren, der Betriebsunterstützungsrahmen (15A) der Hauptantriebsanordnung (11) mit einer Mehrzahl von radial hervorstehenden Beschränkungsabschnitten (13A) ausgebildet ist, die jeweils mit jedem Kupplungsgewicht (20A) korrespondieren, eine Mehrzahl von zweiten Einhakabschnitten (153) an dem Betriebsunterstützungsrahmen (15A) ausgebildet ist, die zugehörige getriebene Anordnung (12) mit einer Mehrzahl von Führungsrahmen (124) zum jeweiligen Montieren der Kupplungsgewichte (20A) ausgebildet ist, jedes Kupplungsgewicht (20A) mit einem Rückstellelement (40A) montiert ist, das mit dem korrespondierenden zweiten Einhakabschnitt (153) des Betriebsunterstützungsrahmens (15A) verbunden ist, jedes Kupplungsgewicht (20A) mit einer Eingriffsaussparung (21) ausgebildet ist, die mit jedem hervorstehenden Beschränkungsabschnitt (13A) korrespondiert, wodurch bewirkt wird, dass der hervorstehende Beschränkungsabschnitt (13A) in die Eingriffsaussparung (21) drücken kann.

13. Die Hochleistungskupplung gemäß Anspruch 7 oder 10, wobei der radial hervorstehende Beschränkungsabschnitt (13A) des Betriebsunterstützungsrahmens der Hauptantriebsanordnung (11) mit einem kleinen Rundloch (130) versehen ist, wobei das kleine Rundloch (130) mit einem kleinen Drehrad (131) montiert ist.

14. Die Hochleistungskupplung gemäß Anspruch 1, wobei jedes Kupplungsgewicht (20) an seiner Innenfläche mit einem Befestigungsanschluss (23) ausgebildet ist, der mit jedem Beschränkungsabschnitt (13A) korrespondiert, ein aus verschleißfestem Material hergestellter verschleißfester Lagerblock (24) in dem Befestigungsanschluss (23) montiert ist, der verschleißfeste Lagerblock (24) mit einer Eingriffsaussparung (21) ausgebildet ist und bewirkt wird, dass die Eingriffsaussparung (21) jeweils von jedem Beschränkungsabschnitt (13A) gedrückt wird.

15. Eine Hochleistungskupplung gemäß Anspruch 1, wobei das Rückstellelement (40A) eine Zugfeder ist.

## Revendications

1. Embrayage haute performance dans lequel une pluralité de poids d'embrayage (20 ; 20A) est installée sur un support de base (10) et chacun desdits poids d'embrayage (20 ; 20A) est installé avec un élément de retour (30) ; **caractérisé en ce que** ledit support de base (10) contient un ensemble d'entraînement principal (11) et un ensemble entraîné associé (12) ; ledit ensemble d'entraînement principal (11) est formé avec une ou plusieurs sections de contrainte (13 ; 13A) correspondant à chaque poids d'embrayage (20 ; 20A) ; permettant ainsi audit ensemble d'entraînement principal (11) d'entraîner ledit ensemble entraîné associé (12) pour tourner de manière conjointe dans un entraînement différentiel admissible ; ledit ensemble entraîné associé (12) est installé avec lesdits poids d'embrayage (20 ; 20A) et chaque poids d'embrayage (20 ; 20A) est formé avec une fente de mise en prise (21) correspondant à chacune desdites sections de contrainte (13 ; 13A) destinée à être comprimée par ladite section de contrainte (13 ; 13A) ; de sorte que ladite section de contrainte (13 ; 13A) peut recevoir le couple transmis d'un moteur, et continuer à pousser dans la face de butée (210) de ladite fente de mise en prise (21) du poids d'embrayage (20 ; 20A) ; ainsi la force de mise en prise de chaque poids d'embrayage (20 ; 20A) est renforcée, et la stabilité de la transmission de puissance est améliorée.

2. Embrayage haute performance selon la revendication 1, dans lequel une pluralité d'éléments intermédiaires corotatifs (40 ; 40A ; 41) sont installés entre ledit ensemble d'entraînement principal (11) et l'ensemble entraîné associé (12) ; ainsi ledit ensemble entraîné associé (12) peut être entraîné pour tourner conjointement par l'ensemble d'entraînement principal (11) par le biais desdits éléments intermédiaires corotatifs (40 ; 40A ; 41) ; lorsque la résistance de rotation rencontrée par ledit ensemble entraîné associé (12) est supérieure au réglage de transformation dudit élément intermédiaire corotatif (40 ; 40A ; 41), ledit élément intermédiaire corotatif (40 ; 40A ; 41) est déformé ; ainsi ledit ensemble d'entraînement principal (11) entraîne ledit ensemble entraîné associé (12) pour tourner conjointement dans un entraînement différentiel admissible ; ledit ensemble d'entraînement principal (11) est installé avec une pluralité de sections de contrainte (13 ; 13A).

3. Embrayage haute performance selon la revendication 1 ou 2, dans lequel ledit ensemble d'entraînement principal (11) est formé avec une pluralité de sections de contrainte en forme de broche (13) à des positions correspondant au côté interne de chaque poids d'embrayage (20) ; ledit ensemble d'entraînement principal (11) est installé avec une pluralité de fentes de montage (110) pour les sections de contrainte (13) ; ledit ensemble entraîné associé (12) est formé avec des fentes de réception (121) correspondant auxdites fentes de montage (110) et un élément intermédiaire compressible corotatif (40) est installé entre ladite fente de montage (110) et ladite fente de réception (121) ; ledit ensemble d'entraînement principal (11) entraîne ledit ensemble entraîné associé (12) pour tourner conjointement dans un entraînement différentiel admissible ; l'ensemble entraîné associé (12) est installé de manière pivotante avec chaque poids d'embrayage (20) qui est formé avec une fente de mise en prise en forme de V (21) correspondant à chaque section de contrainte en forme de broche (13), permet ainsi à la section de contrainte en forme de broche (13) de pousser dans la fente de mise en prise en forme de V (21).

4. Embrayage haute performance selon la revendication 3, dans lequel un rebord de contrainte (111) est formé conjointement à chaque dite fente de montage (110) pour empêcher la séparation dudit élément intermédiaire corotatif (40) respectif ; ledit élément intermédiaire corotatif (40) est une bande en plastique avec une résistance chimique et une élasticité de compression.

5. Embrayage haute performance selon la revendication 3, dans lequel ledit élément intermédiaire corotatif (40) installé entre ladite fente de montage (110) dudit ensemble d'entraînement principal (11) et la fente de réception (121) respective dudit ensemble entraîné associé (12) est un ressort de compression.

6. Embrayage haute performance selon la revendication 1, dans lequel un côté dudit ensemble d'entraînement principal (11) est combiné de manière composite avec un châssis d'assistance de fonctionnement (15 ; 15A) et dans lequel la combinaison complexe dudit ensemble d'entraînement principal (11) et dudit châssis d'assistance de fonctionnement (15 ; 15A) est fournie avec une pluralité de sections de contrainte (13A) correspondant à chaque poids d'embrayage respectivement, une pluralité d'éléments intermédiaires corotatifs (40A; 41) est installée entre la combinaison complexe et l'ensemble entraîné associé (12) ; permettant ainsi audit ensemble d'entraînement principal (11) qui est combiné de manière composite avec ledit châssis d'assistance de fonctionnement (15 ; 15A) d'entraîner ledit ensemble entraîné associé (12) pour tourner conjointement dans un entraînement différentiel admissible ; une fente de mise en prise (21) est formée sur chaque poids d'embrayage (20; 20A) correspondant à chacune desdites sections de contrainte (13A) ; lorsque la résistance de rotation rencontrée par ledit ensemble entraîné associé (12) est supérieure au réglage de transformation dudit élément intermédiaire corotatif (40A; 41), ledit élément intermédiaire corotatif (40A; 41) est déformé, ainsi ledit ensemble d'entraînement principal (11) entraîne ledit ensemble entraîné associé (12) pour tourner conjointement dans un entraînement différentiel admissible ; ainsi ladite section de contrainte (13A) installée sur la combinaison complexe dudit châssis d'assistance de fonctionnement (15 ; 15A) dudit ensemble d'entraînement principal (11), reçoit le couple transmis par le moteur et continue à pousser dans ladite face de butée (20) de ladite fente de mise en prise (21) du poids d'embrayage (20 ; 20A), ainsi la force de mise en prise de chaque poids d'embrayage (20 ; 20A) est renforcée et la stabilité de la transmission de puissance est améliorée.

7. Embrayage haute performance selon la revendication 6, dans lequel un côté interne axial dudit ensemble d'entraînement principal (11) est combiné de manière composite avec le châssis d'assistance de fonctionnement (15) qui est formé avec une pluralité de sections de contrainte en saillie (13A) correspondant à chaque poids d'embrayage (20A) respectivement et une pluralité de sections de crochet (150) ; chaque section de crochet (150) est formée avec un trou de raccordement (151) ; ledit ensemble entraîné associé (12) est formé avec une pluralité de trous de retenue (122) correspondant aux trous de raccordement (151) ; et chacun desdits trous de raccordement (151) dudit châssis d'assistance de fonctionnement (15) et le trou de retenue correspondant (122) de l'ensemble entraîné associé (12) sont raccordés respectivement avec les extrémités opposées d'un élément intermédiaire corotatif à base de ressort (41) ; ledit ensemble d'entraînement principal (11) entraîne ledit ensemble entraîné associé (12) pour tourner conjointement dans un entraînement différentiel admissible ; ledit ensemble entraîné associé (12) est installé de manière pivotante avec une pluralité de poids d'embrayage (20) et chacun desdits poids d'embrayage (20) est formé avec une fente de mise en prise (21) correspondant à chacune desdites sections de contrainte en saillie (13A), permettant ainsi à ladite section de contrainte en saillie (13A) de pousser dans ladite fente de mise en prise (21).

8. Embrayage haute performance selon la revendication 7, dans lequel un côté interne axial dudit ensemble d'entraînement principal (11) est combiné de manière composite avec un châssis d'assistance de fonctionnement (15) qui s'étend à travers ledit ensemble entraîné associé (12) et est formé avec une pluralité de sections de contrainte radiales en saillie (13A) correspondant à chaque poids d'embrayage (20) respectivement, et avec une pluralité de sections de crochet (150) ; chacune desdites sections de crochet (150) est formée avec un trou de raccordement (151) ; ledit ensemble entraîné associé (12) est formé avec une pluralité de trous de retenue (122) correspondant auxdits trous de raccordement (151), et chacun desdits trous de raccordement (151) dudit châssis d'assistance de fonctionnement (15) et ledit trou de retenue correspondant (122) dudit ensemble entraîné associé (12) sont raccordés avec les extrémités opposées d'un élément intermédiaire corotatif de ressort hélicoïdal (41) respectivement ; ledit ensemble d'entraînement principal (11) entraîne ledit ensemble entraîné associé (12) pour tourner conjointement dans un entraînement différentiel admissible ; et ledit ensemble entraîné associé (12) est installé de manière pivotante avec chaque poids d'embrayage (20) qui est formé avec une fente de mise en prise en forme de V (21) correspondant à chaque section de contrainte en saillie (13A), permettant ainsi auxdites sections de contrainte en saillie (13A) de pousser dans ladite fente de mise en prise en forme de V (21).

9. Embrayage haute performance selon la revendication 8, dans lequel ledit trou de raccordement (151) de ladite section de crochet radiale (150) sur ledit châssis d'assistance de fonctionnement (15) dudit ensemble d'entraînement principal (11) et ledit trou de retenue (122) dudit ensemble entraîné associé (12) sont prévus pour que les deux extrémités opposées d'un élément intermédiaire corotatif à base de ressort hélicoïdal (41) se raccordent ; ledit élément intermédiaire corotatif à base de ressort hélicoïdal (41) est monté sur le pivot en même temps que ledit poids d'embrayage (20) est monté sur le pivot, afin d'éviter tout décalage dudit élément intermédiaire corotatif à base de ressort hélicoïdal (41) et pour constituer son positionnement.

10. Embrayage selon la revendication 6, dans lequel un côté interne axial dudit ensemble d'entraînement principal est combiné de manière composite avec un châssis d'assistance de fonctionnement (15A), qui s'étend à travers ledit ensemble entraîné associé (12) ; une pluralité d'éléments intermédiaires corotatifs (40A) est agencée entre ledit châssis d'assistance de fonctionnement (15A) et ledit ensemble entraîné associé (12) ; moyennant quoi ledit ensemble d'entraînement principal rotatif (11) entraîne ledit ensemble entraîné associé (12) pour la rotation conjointe par le biais des éléments intermédiaires corotatifs (40A) ; lorsque la résistance de rotation rencontrée par ledit ensemble entraîné associé (12) est supérieure au réglage de transformation dudit élément intermédiaire corotatif (40A), l'élément intermédiaire corotatif (40A) est déformé, ainsi ledit ensemble d'entraînement principal (11) entraîne ledit ensemble entraîné associé (12) à tourner conjointement dans un entraînement différentiel admissible ; ledit châssis d'assistance de fonctionnement (15A) est formé avec une pluralité de sections de contrainte radiales en saillie (13A) correspondant à chaque poids d'embrayage (20A) respectivement ; ledit ensemble entraîné associé (12) est installé de manière pivotante avec chaque poids d'embrayage (20A) qui est formé avec une fente de mise en prise (21) correspondant à chacune desdites sections de contrainte radiales en saillie (13A) et permet à ladite section de contrainte radiale en saillie (13A) de pousser dans ladite fente de mise en prise (21).

11. Embrayage haute performance selon la revendication 10, dans lequel un côté interne axial dudit ensemble d'entraînement principal (11) est combiné de manière composite avec un châssis d'assistance de fonctionnement (15A) qui s'étend à travers ledit ensemble entraîné associé (12) ; ledit châssis d'assistance de fonctionnement (15A) dudit ensemble d'entraînement principal (11) est formé avec une pluralité de sections de contrainte radiales en saillie (13A) correspondant aux poids d'embrayage (20A) respectivement ; une pluralité de premières sections d'accrochage (152) est formée sur ledit châssis d'assistance de fonctionnement (15A) ; ledit ensemble entraîné associé (12) est formé avec une pluralité de sections de retenue (123) correspondant auxdites premières sections d'accrochage (152) et les deux extrémités opposées de chaque élément intermédiaire corotatif à base de ressort (40A) sont raccordées avec chacune desdites sections de retenue (123) correspondantes et ladite première section d'accrochage (152) correspondante ; ainsi ledit ensemble d'entraînement principal (11) entraîne ledit ensemble entraîné associé (12) à tourner dans un entraînement différentiel admissible ; ledit ensemble entraîné associé (12) est installé de manière pivotante avec chaque poids d'embrayage (20A) qui est formé avec une fente de mise en prise en forme de V (21) correspondant à chacune desdites sections de contrainte en saillie (13A) et permettant ainsi à ladite section de contrainte en saillie (13A) de pousser dans ladite fente de mise en prise en forme de V (21),

12. Embrayage haute performance selon la revendication 10, dans lequel ledit support de base (10) contient un ensemble d'entraînement principal (11) et un ensemble entraîné associé (12) ; un côté interne axial dudit ensemble d'entraînement principal (11) est combiné de manière composite avec un châssis d'assistance de fonctionnement (15A) qui s'étend à travers ledit ensemble entraîné associé (12) ; une pluralité d'éléments intermédiaires corotatifs (40A) est agencée entre ledit châssis d'assistance de fonctionnement (15A) et ledit ensemble entraîné associé (12) ; ainsi ledit ensemble d'entraînement principal (11) entraîne ledit ensemble entraîné associé (12) pour tourner conjointement dans un entraînement différentiel admissible ; ledit châssis d'assistance de fonctionnement (15A) dudit ensemble d'entraînement principal (11) est formé avec une pluralité de sections de contrainte en saillie radiale (13A) correspondant à chaque poids d'embrayage (20A) respectivement ; une pluralité de secondes sections d'accrochage (153) est formée sur le châssis d'assistance de fonctionnement (15A) ; ledit ensemble entraîné associé (12) est formé avec une pluralité de châssis de guidage (124) pour monter les poids d'embrayage (20A) respectivement ; chaque poids d'embrayage (20A) est installé avec un élément de retour (40A) qui se raccorde avec ladite seconde section d'accrochage (153) correspondante dudit châssis d'assistance de fonctionnement (15A) ; ledit poids d'embrayage (20A) est formé avec une fente de mise en prise (21) correspondant à chacune desdites sections de contrainte en saillie (13A), permettant ainsi à ladite section de contrainte en saillie (13A) de pousser dans ladite fente de mise en prise (21).

13. Embrayage haute performance selon la revendication 7 ou 10, dans lequel ladite section de contrainte radiale en saillie (13A) du châssis d'assistance de fonctionnement dudit ensemble d'entraînement principal (11) est montée avec un petit trou rond (130) et ledit petit trou rond (130) est installé avec une petite roue rotative (131).

14. Embrayage haute performance selon la revendication 1, dans lequel chacun desdits poids d'embrayage (20) est formé, dans sa surface interne, avec un orifice de fixation (23) correspondant à chacune desdites sections de contrainte (13A) ; un bloc de coussin résistant à l'usure (24) réalisé avec un matériau résistant à l'usure est installé dans ledit orifice de fixation (23) ; le bloc de coussin résistant à l'usure (24) est formé avec une fente de mise en prise (21) et permet à ladite fente de mise en prise (21) d'être comprimée par chaque section de contrainte (13A) respectivement.

15. Embrayage haute performance selon la revendication 1, dans lequel ledit élément de retour (40A) est un ressort d'extension.
